# EUROPÄISCHE PATENTSCHRIFT

(11) **EP 2 576 019 B1**
(45) Veröffentlichungstag und Bekanntmachung des Hinweises auf die Patenterteilung: **24.12.2014**
(21) Anmeldenummer: 11723248.8
(22) Anmeldetag: 09.05.2011
(51) Int. Cl.: B01D 53/86, B60L 1/00, B60L 11/18, B66F 9/075, B01J 29/072, B01J 29/46, B01J 37/00

(54) **VERFAHREN UND VORRICHTUNG ZUR BESEITIGUNG VON NOX UND N2O**
METHOD AND DEVICE FOR ELIMINATING NOX AND N2O
PROCÉDÉ ET DISPOSITIF D'ÉLIMINATION DE NOX ET N2O

(30) Priorität: 04.06.2010 DE 102010022755
(43) Veröffentlichungstag der Anmeldung: 10.04.2013
(73) Patentinhaber: ThyssenKrupp Uhde GmbH, 44141 Dortmund (DE)
(72) Erfinder: SCHWEFER, Meinhard, 59872 Meschede (DE); GROVES, Michael, 58285 Gevelsberg (DE); PERBANDT, Christian, 44357 Dortmund (DE); SIEFERT, Rolf, 33378 Rheda-Wiedenbrück (DE)
(74) Vertreter: Wolff, Felix
(86) Internationale Anmeldenummer: PCT/EP2011/002304
(87) Internationale Veröffentlichungsnummer: WO 2011/151006

(56) Entgegenhaltungen:
- WO-A1-01/51181
- WO-A1-01/51182
- WO-A1-01/51415

## Beschreibung

Die Erfindung betrifft ein Verfahren sowie eine Vorrichtung zur katalytischen Beseitigung von NOₓ und N₂O.

Bei vielen Prozessen, wie z.B. Verbrennungsprozessen oder bei der industriellen Herstellung von Salpetersäure oder Caparolactam resultiert ein mit Stickstoffmonoxid NO, Stickstoffdioxid NO₂ (zusammen bezeichnet als NOₓ) sowie Lachgas N₂O beladenes Abgas. Während NO und NO₂ seit langem als Verbindungen mit ökotoxischer Relevanz bekannt sind (saurer Regen, Smog-Bildung) und weltweit Grenzwerte für deren maximal zulässige Emissionen festgelegt sind, rückte in den letzten Jahren in zunehmendem Maße auch Lachgas in den Fokus des Umweltschutzes, da dieses in nicht unerheblichem Maße zum Abbau von stratosphärischem Ozon und zum Treibhauseffekt beiträgt. Es besteht daher aus Gründen des Umweltschutzes ein dringender Bedarf an technischen Lösungen, die Lachgasemissionen zusammen mit den NOₓ-Emissionen zu beseitigen.

Zur Beseitigung von N₂O einerseits und NOₓ andererseits sind bereits zahlreiche Möglichkeiten bekannt.

Bei der NOₓ-Reduktion ist die selektive katalytische Reduktion (SCR) von NOₓ mittels Ammoniak in Gegenwart vanadiumhaltiger TiO₂-Katalysatoren hervorzuheben (vgl. etwa G. Ertl, H. Knözinger J. Weitkamp: Handbook of Heterogeneous Catalysis, Vol. 4, Seiten 1633-1668, VCH Weinheim (1997)). Diese kann je nach Katalysator bei Temperaturen von ca. 150°C bis ca. 450°C ablaufen und wird im technischen Maßstab bevorzugt zwischen 200°C und 400°C, insbesondere zwischen 250°C und 350°C betrieben. Sie ist die meist genutzte Variante der NOₓ-Minderung aus Abgasen industrieller Prozesse und ermöglicht einen NOₓ-Abbau von mehr als 90%.

Auch auf Basis von Zeolith-Katalysatoren finden sich Verfahren zur Reduktion von NOₓ, die unter Verwendung verschiedenster Reduktionsmittel ablaufen. Neben Cuausgetauschten Zeolithen (vgl. z.B. EP-A-914,866) scheinen vor allem eisenhaltige Zeolithe für praktische Anwendungen von Interesse.

So beschreibt US-A-5,451,387 ein Verfahren zur selektiven katalytischen Reduktion von NOₓ mit NH₃ über eisenausgetauschten Zeolithen, welches bevorzugt bei Temperaturen zwischen 200 und 550°C, insbesondere um 400°C arbeitet.

EP-A-756,891 beschreibt ein Verfahren zur Reduktion von NOₓ mittels NH₃ in Gegenwart wabenförmiger Monolithe aus eisenhaltigen ZSM-5-Zeolithen. Als Vorteil der Fe-Zeolith-Katalysatoren gegenüber klassischen V₂O₅-TiO₂ basierten DeNOₓ-Katalysatoren wird hier ebenfalls der erweiterte Temperaturbereich von 200°C bis 600°C genannt.

Nachteilig an Fe-Zeolith-Katalysatoren zur NOₓ-Reduktion ist jedoch deren Verfügbarkeit und Preis. Letzterer ist verglichen zu weitverbreiteten und etablierten V₂O₅-TiO₂₋ basierten DeNOₓ-Katalysatoren deutlich höher anzusetzen.

Im Unterschied zur NOₓ-Minderung in Abgasen, die seit vielen Jahren in der Technik etabliert ist, existieren zur N₂O-Beseitigung nur wenige technische Prozesse, die zumeist auf einen thermischen oder katalytischen Abbau des N₂O abzielen. Eine Übersicht über die Katalysatoren, deren prinzipielle Eignung zum Abbau und zur Reduktion von Lachgas nachgewiesen wurde, gibt Kapteijn et al. (Kapteijn F. et al., Appl. Cat. B: Environmental 9 (1996) 25-64). Die katalytische Zersetzung von Lachgas in N₂ und O₂ bietet dabei gegenüber der katalytischen Reduktion mit ausgewählten Reduktionsmitteln, wie NH₃ oder Kohlenwasserstoffen, den Vorteil, dass keine Kosten für den Verbrauch an Reduktionsmitteln anfallen. Allerdings kann eine wirksame N₂O-Minderung auf Basis einer katalytischen Zersetzung, im Gegensatz zur N₂O- oder auch NOₓ-Reduktion, effektiv nur bei Temperaturen größer 400 °C, vorzugsweise größer 450°C erreicht werden.

Besonders geeignet zur katalytischen Zersetzung des N₂O in N₂ und O₂ erscheinen wiederum Übergangsmetall-beladene Zeolith-Katalysatoren (US-A-5,171,553).

Als insbesondere vorteilhaft werden Eisen-beladene Zeolith-Katalysatoren beschrieben (z.B. in EP-A-955,080 oder WO-A-99/34,901). Die Aktivität der Fe-Zeolith-Katalysatoren zur N₂O-Zersetzung wird dabei durch gleichzeitige Gegenwart von NOₓ erheblich gesteigert, wie beispielsweise von Kögel et al. in Catalysis Communications 2 273 - 276 (2001) oder von Perez-Ramirez et al. in Journal of Catalysis 208, 211 - 223 (2003) wissenschaftlich dargelegt wird.

Auch die kombinierte Beseitigung von NOₓ und N₂O auf Basis einer katalytischen Reduktion des NOₓ mit NH₃ (in einer DeNOₓ-Stufe) und einer katalytische Zersetzung von N₂O in N₂ und O₂ über eisenhaltigen Zeolith-Katalysatoren (in einer DeN₂O-Stufe) ist in der Patentliteratur beschrieben.

So beansprucht beispielsweise DE 10 001 541 B4 ein Verfahren zur Beseitigung von NOₓ und N₂O aus dem Restgas der Salpetersäureproduktion, wobei das zu reinigende Abgas zunächst durch eine DeNOₓ-Stufe und sodann durch eine DeN₂O-Stufe mit eisenbeladenen Zeolith-Katalysatoren geleitet wird. In der DeNOₓ-Stufe wird der NOₓ-Gehalt soweit reduziert, dass ein optimales NOₓ/N₂O-Verhältnis von 0,001 - 0,5 eingestellt wird, welches zu einem beschleunigten N₂O-Abbau in der nachfolgenden DeN₂O-Stufe führt.

Die gewählte Reihenfolge der Prozessstufen ist dabei aus verfahrens- bzw. prozesstechnischer Sicht sehr vorteilhaft, da das Verfahren im Restgas der Salpetersäureproduktion, zwischen Absorptionsturm und Restgasturbine in einem aufsteigenden Temperaturprofil angeordnet ist; d.h. das Restgas weist zunächst vor Eintritt in die DeNOₓ-Stufe eine niedrige Eintrittstemperatur auf, welche < 400°C vorzugsweise < 350 °C beträgt, so dass auch klassische DeNOₓ-Katalysatoren auf V₂O₅-TiO₂-Basis verwendet werden können. Nach der DeNOₓ-Stufe vor Eintritt in die DeN₂O-Stufe erfolgt dann eine (einmalige) Aufheizung des Restgases auf 350-500 °C, so dass eine effektive katalytische N₂O-Zersetzung möglich ist. Das Abgas wird dann einer Restgasturbine zugeführt, in welcher unter Entspannung und Abkühlung des Abgases eine Rückgewinnung des Wärmeinhalts des Abgases erfolgt.

Auch eine umgekehrte Verschaltung der beiden Verfahrensstufen, d.h. in einer Reihenfolge, in der zunächst der N₂O-Abbau vorgesehen ist und dann der NOₓ-Abbau erfolgt, ist möglich, wie in WO-A-01/51181 gelehrt wird.

Dazu wird das Abgas bei einer einheitlichen Temperatur von < 500 °C über zwei eisenbeladene Zeolith-Katalysatoren enthaltende Reaktionszonen geleitet, die räumlich voneinander getrennt oder miteinander verbunden sein können. Dabei erfolgt die N₂O-Zersetzung in der DeN₂O-Stufe zunächst bei ungemindertem NOₓ-Gehalt, d.h. unter voller Ausnutzung des co-katalytischen NOₓ-Effekts auf die N₂O-Zersetzung, und sodann nach intermediärer Zugabe von Ammoniak die katalytische NOₓ-Reduktion. Da die NOₓ-Reduktion vorzugsweise bei gleicher Temperatur ablaufen soll wie die N₂O-Zersetzung, kommen in der DeNOₓ-Stufe ebenfalls Fe-Zeolith-Katalysatoren zum Einsatz, welche im Unterschied zu klassischen SCR-Katalysatoren, wie z.B. V₂O₅-TiO₂-basierten Katalysatoren, auch bei höheren Temperaturen > 400°C betrieben werden können. Eine intermediäre Abkühlung des Prozessgases ist damit nicht erforderlich.

Wollte man beispielsweise aus Kostengründen anstelle der Fe-Zeolith-Katalysatoren auf kostengünstigere SCR-Katalysatoren, wie V₂O₅-TiO₂-basierte Katalysatoren zurückgreifen, wäre nach der DeN₂O-Stufe zum Betrieb der DeNOₓ-Stufe also immer eine Abkühlung des Restgases erforderlich. Dies wäre insbesondere dann, auch bei Verwendung anderer DeNOₓ-Katalysatoren, wie z.B. Fe-Zeolith basierter Katalysatoren, von großem Vorteil, wenn bedingt durch den konkreten Anwendungsfall, beispielsweise in einer Anlage zur Herstellung von Salpetersäure nach dem sog. Monomitteldruckverfahren oder z.B. in einer Anlage zur Herstellung von Caprolactam eine niedrige Austrittstemperatur nach der Entstickungseinheit gewünscht bzw. erforderlich ist.

In diesem Fall sieht sich der Fachmann auf dem Gebiet der Abgasreinigung aber mit folgender Problematik konfrontiert, die den Betrieb einer klassischen DeNOₓ-Stufe auf niederem Temperaturniveau nachgeschaltet einer Fe-Zeolith-Katalysatoren enthaltenden DeN₂O-Stufe als technisch und wirtschaftlich sehr nachteilig erscheinen lässt.

So bewirken nämlich Fe-Zeolith-Katalysatoren bekanntermaßen, wie z.B. von Kögel et al. in Catalysis Communications 2 273 - 276 (2001) oder von Perez-Ramirez et al. in Journal of Catalysis 208, 211 - 223 (2002) gezeigt, nicht nur eine Beschleunigung der N₂O-Zersetzung, sondern in Gegenwart von NOₓ auch eine beschleunigte Verschiebung des NO/NO₂-Verhältnisses oder des NOₓ-Oxidationsgrades. Letzterer ist definiert als molarer Anteil von NO₂ an der molaren Gesamtmenge von NOₓ (= Summe aus NO und NO₂); d.h. je höher die Betriebstemperatur der DeN₂O-Stufe, umso schneller und umso weiter nähert sich das NO/NO₂-Verhältnis am Austritt der Stufe der thermodynamisch vorgegebenen Gleichgewichtslage.

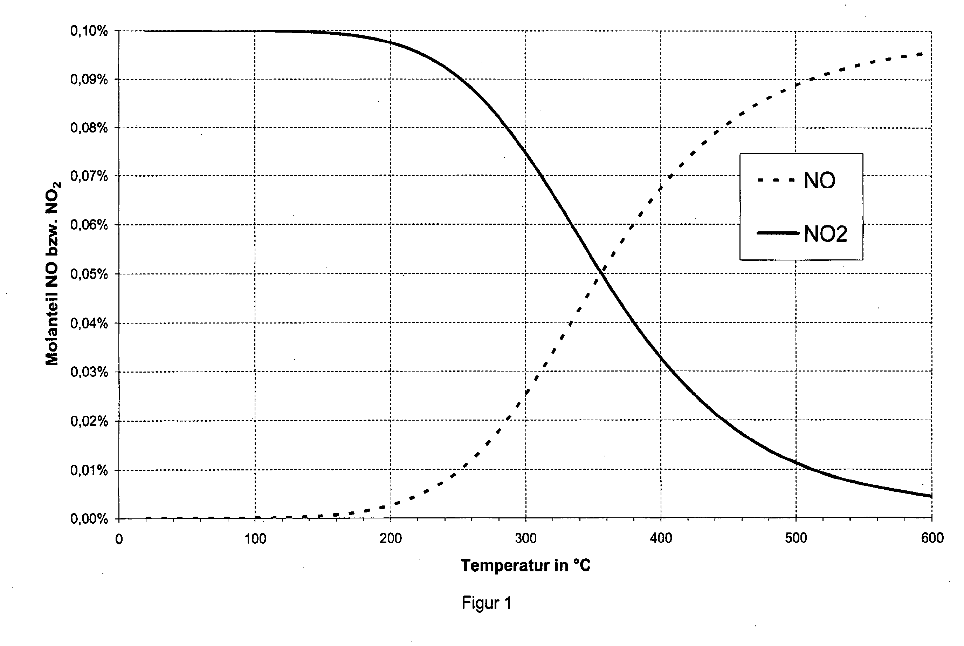

Während bei tiefen Temperaturen von < 400°C die Bildung von NO₂ überwiegt, findet bei höheren Temperaturen von > 400°C oder insbesondere bei T> 450°C eine bevorzugte Bildung von NO statt (vergleiche hierzu Fig. 1, welche die Molanteile von NO und NO₂ im thermodynamischen Gleichgewicht bei 1 bar abs ausgehend von 500 ppm NO, 500 ppm NO₂, 2 %Vol O₂ und Rest N₂ zeigt).

Die bei niederen Temperaturen durch Reaktion von N₂O mit NO bewirkte Bildung von NO₂ gemäß nachstehender Reaktionsgleichung (1) wird zunehmend bedeutungslos, da gebildetes NO₂ gemäß nachstehender Reaktionsgleichung (2) sehr schnell wieder zu NO abgebaut wird.

N₂O + NO → NO₂+N₂ (1)

NO₂ ↔ NO + ½ O₂ (2)

Am Austritt der DeN₂O-Stufe stellt sich also bei hohen Temperaturen derjenige NOₓ-Oxidationsgrad ein, welcher dem thermodynamischen Gleichgewicht entspricht.

Dieser Zusammenhang ist dem Fachmann wohl bekannt und beispielsweise in vorgenanntem Artikel von Kögel et al. und Perez-Ramirez et al. beschrieben. Nach Perez-Ramirez et al., Figur 5a auf S. 215, stellt sich in einem wasserfreien Testgas mit 1,5 mbar N₂O und 0,4 mbar NOₓ trotz intermediärer Bildung von NO₂ gemäß Reaktionsgleichung (1) bei Temperaturen > 700 K (entsprechend > 427 °C) auch bei hoher Raumgeschwindigkeit von 60.000 h⁻¹ ein NO/NO₂-Verhältnis ein, welches der thermodynamischen Gleichgewichtslage entspricht. Im vorgenanntem Artikel von Kögel et al. wird in Figur 1 gezeigt, dass ausgehend von einem wasserhaltigen Testgas enthaltend 1000 ppm N₂O und 1000 ppm NO das thermodynamische NOₓ-Gleichgewicht bei einer Raumgeschwindigkeit von 15.000h⁻¹ ab 400°C erreicht wird.

Dies bedeutet, dass am Austritt einer DeN₂O-Stufe bei T > 400 °C und 1 bar abs Druck von einem Oxidationsgrad < 30 % bei T > 450 °C sogar von einem Oxidationsgrad < 20 % auszugehen ist. Ein solcher Oxidationsgrad ist im allgemeinen aber äußerst ungünstig zum Betrieb einer DeNOₓ-Stufe.

So funktioniert eine DeNOₓ-Stufe bekanntermaßen dann am besten, wenn das Verhältnis von NO/NO₂ = 1/1 ist, d.h. der Oxidationsgrad ca. 50% beträgt. Der Fachmann spricht in diesem Fall von einer sogenannten "fast SCR" (vergl. nachstehende Reaktionsgleichung 3), welche um ein Vielfaches schneller abläuft als die sogenannte "standard SCR" (vergl. nachstehende Reaktionsgleichung 4) oder die sogenannte "NO₂-SCR" (vergl. nachstehende Reaktionsgleichung 5).

4 NH₃ +2 NO + 2 NO₂ → 4 N₂ + 6 H₂O (3)

4 NH₃ +4 NO + O₂ → 4 N₂ +6 H₂O (4)

4 NH₃ +3 NO₂ → 3,5 N₂ + 6 H₂O (5)

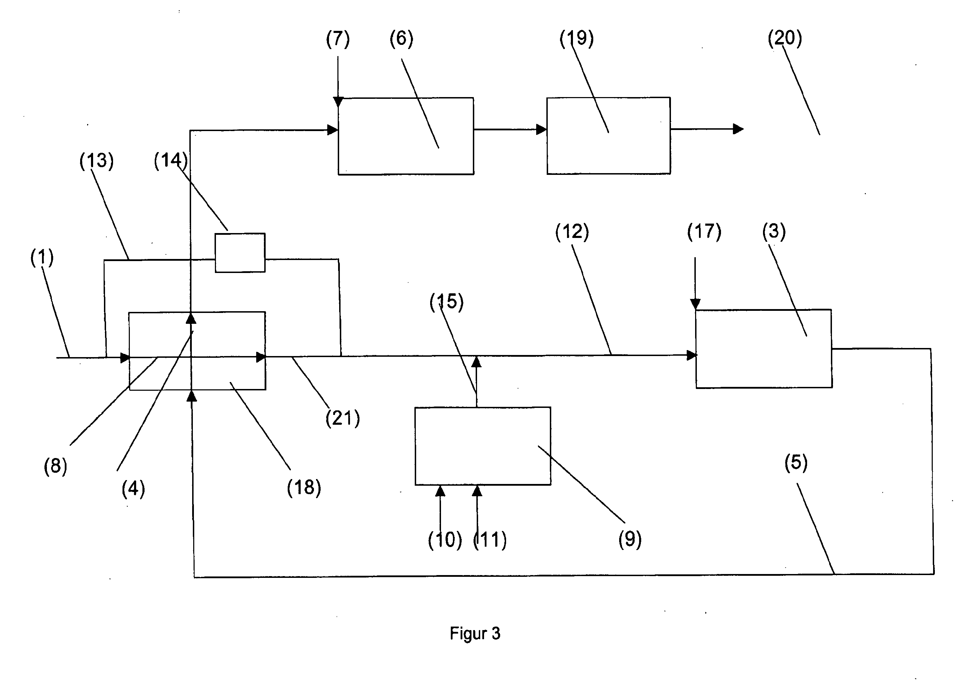

Die Abhängigkeit der Reaktionsgeschwindigkeit vom NOₓ-Oxidationsgrad ist insbesondere von Bedeutung für den Betrieb einer DeNOₓ-Stufe bei niedrigen Temperaturen. Dies gilt sowohl bei Verwendung klassischer SCR-Katalysatoren, wie V₂O₅-TiO₂-basierten DeNOₓ-Katalysatoren, wie beispielsweise von Koebel et al. in Catalysis Today 73, (2002), 239 - 247 beschrieben (vgl. dortige Fig. 3) als auch beispielsweise für DeNOₓ-Katalysatoren auf Eisen-Zeolith-Basis.

Daraus ergibt sich, dass der Betrieb einer DeNOₓ-Stufe bei niederen Temperaturen < 400 °C, bevorzugt < 350 °C und insbesondere < 300 °C nachgeschaltet einer N₂O-Zersetzung auf Basis von Fe-Zeolith-Katalysatoren äußerst unvorteilhaft ist, da die Aktivität der NOₓ-Reduktion, d.h. die Leistung des DeNOₓ-Katalysators in der DeNOₓ-Stufe durch den ungünstigen NOₓ-Oxidationsgrad stark beeinträchtigt ist.

Dieser Nachteil kann durch eine Erhöhung der Katalysatormenge in der DeNOₓ-Stufe nur bedingt ausgeglichen werden, da zur Erreichung hoher Abbauraten an NOₓ von z.B. > 80 % oder vorzugsweise > 90 % insbesondere bei hohen NOₓ-Eintrittskonzentrationen unverhältnismäßig große Mengen an zusätzlichem Katalysator benötigt würden. Diese würden aufgrund übergroßer Investitions- und Betriebskosten nicht nur die Wirtschaftlichkeit des Verfahrens in Frage stellen, sondern wären in vielen Fällen auch aufgrund von technischen Vorgaben, wie Platzangebot oder zulässigem Druckverlust, nicht vertretbar.

Aufgabe der vorliegenden Erfindung ist es damit, ein Verfahren zur Entfernung von N₂O und NOₓ aus Abgasen durch katalytische Zersetzung von N₂O mittels eisenhaltiger Zeolith-Katalysatoren und durch katalytischen Reduktion des NOₓ mittels Reduktionsmitteln bereitzustellen, wobei die DeNOₓ-Stufe nachgeschaltet zur DeN₂O-Stufe bei Eintrittstemperaturen von T < 400 °C, bevorzugt < 350 °C und insbesondere von T < 300°C betrieben werden soll und welches die oben genannten Nachteile überwindet.

Weiterhin ist es Aufgabe der vorliegenden Erfindung eine Vorrichtung bereitzustellen, mit welcher das zuvor genannte Verfahren betrieben werden kann und welches eine einfache und wirtschaftlich günstige Einstellung der erforderlichen Betriesparameter für die DeN₂O-Stufe und DeNOₓ-Stufe ermöglicht.

Gelöst wird die oben gestellte Aufgabe dadurch, dass über die Eisen-Zeolith-Katalysatoren enthaltende DeN₂O-Stufe ein Abgas geleitet wird, welches eine ausgewählte Menge an Wasser und ein ausgewähltes Verhältnis von N₂O zu NOₓ aufweist. Bei entsprechender Wahl bzw. Einstellung der sonstigen Betriebsparameter resultiert damit am Ausgang der DeN₂O-Stufe eine höherer Anteil an NO₂ im NOₓ als dem thermodynamischen Gleichgewicht entspricht. Dadurch läßt sich die nachfolgende DeNOₓ-Stufe unter Bedingungen einer "fast SCR" betreiben.

Überraschenderweise wurde nämlich bei einer kinetischen Modellierung bzw. Simulation des NOₓ-Gleichgewichtes und der NOₓ-assistierten N₂O-Zersetzung auf Eisen-Zeolith-Katalysatoren gefunden, dass in Gegenwart großer Mengen an Wasser im Abgas oder bei einem hohen Überschussverhältnis von N₂O zu NOₓ im Abgas oder bei einer Kombination beider Faktoren die Lage des NOₓ-Gleichgewichts verschoben bzw. die Geschwindigkeit der Einstellung des NOₓ-Gleichgewichtes deutlich verringert werden kann. Das heißt, das NOₓ-Gleichgewicht wird zum einen durch Reaktion des NO mit N₂O (gemäß Reaktionsgleichung 1) fortwährend zur Seite des NO₂ verschoben, zum anderen reagiert das intermediär gebildete NO₂ (sowie etwaig zuvor im Eintrittsgasstrom vorhandenes NO₂) in Gegenwart entsprechender Mengen an Wasserdampf deutlich langsamer zu NO als in Abwesenheit von Wasserdampf. Die Einstellung der thermodynamischen Gleichgewichtslage kann hierdurch auch bei hohen Temperaturen, d.h. im Temperaturbereich von 400 °C bis 650 °C, deutlich verzögert werden. Damit kann durch Einstellung der Verweilzeit in der DeN₂O-Stufe, d.h. durch Wahl der Raumgeschwindigkeit ein Betriebspunkt eingestellt werden, bei welchem gleichzeitig hohe N₂O-Abbauraten als auch ein hoher NOₓ-Oxidationsgrad von > 30%, bevorzugt von > 40 % insbesondere von > 45% erreicht wird.

Dabei ist die Einstellung der Raumgeschwindigkeit erwartungsgemäß nicht nur nach oben durch den minimal gewünschten N₂O-Abbau von > 80%, vorzugsweise von >90% begrenzt, sondern überraschenderweise auch nach unten durch einen maximalen N₂O-Abbau, welcher erfindungsgemäß < 98%, vorzugsweise < 97%, besonderes bevorzugt < 95% beträgt. Das heißt, die Raumgeschwindigkeit ist nach unten so zu limitieren, dass am Austritt der DeN₂O-Stufe immer ein signifikanter Rest an N₂O im Abgas verbleibt, welcher gemäß Reaktionsgleichung (1) eine fortlaufende Bildung von NO₂ bewirkt.

Im Zusammenspiel mit den sonstigen Betriebsparametern kann so der Oxidationsgrad des NOₓ am Austritt der DeN₂O-Stufe abweichend vom thermodynamischen Gleichgewicht auf einen Wert von 30-70 %, bevorzugt von 40 - 65 % und besonders bevorzugt von 45 - 60 % eingestellt werden, so dass eine DeNOₓ-Stufe bei niederer Temperatur nachgeschaltet zu einer Fe-Zeolith-Katalysatoren enthaltenden DeN₂O-Stufe betrieben werden kann. Dabei ist der NOₓ-Oxidationsgrad als Verhältnis der molaren Menge von NO₂ zur molaren Gesamtmenge von NOₓ definiert.

Die Erfindung betrifft ein Verfahren zur Minderung des Gehalts von NOₓ und N₂O in NOₓ und N₂O enthaltenden Gasen mit den Schritten
a) Leiten eines N₂O, NOₓ und Wasser enthaltenden Gasstroms zur Verringerung des N₂O-Gehalts durch Zersetzung des N₂O in Stickstoff und Sauerstoff in eine DeN₂O-Stufe enthaltend einen mit Eisen beladenen Zeolith-Katalysator, wobei der N₂O, NOₓ und Wasser enthaltende Gasstrom beim Eintritt in die DeN₂O-Stufe einen Wassergehalt zwischen 1,0 und 10 Vol. % aufweist, wobei das Verhältnis der molaren Menge an N₂O, die in die DeN₂O-Stufe eintritt, zur molaren Menge an NOₓ, die aus der DeN₂O-Stufe austritt, mindestens 1,0 beträgt, oder wobei der N₂O, NOₓ und Wasser enthaltende Gasstrom beim Eintritt in die DeN₂O-Stufe einen Wassergehalt zwischen 0,1 und kleiner als 1,0 Vol. % aufweist, wobei das Verhältnis der molaren Menge an von N₂O, die in die DeN₂O-Stufe eintritt, zur molaren Menge an NOₓ die aus der DeN₂O-Stufe austritt, mindestens 1,5 beträgt, wobei die Temperatur des Gasstroms in der DeN₂O-Stufe auf einen Wert zwischen 400°C und 650 °C eingestellt ist, wobei der Druck in der DeN₂O-Stufe auf einen Wert zwischen 1 und 50 bar abs eingestellt ist und wobei die Raumgeschwindigkeit in der DeN₂O-Stufe auf einen solchen Wert eingestellt ist, dass in der DeN₂O-Stufe ein N₂O-Abbau von 80% bis 98 % resultiert mit der zusätzlichen Maßgabe, dass der NOₓ-Oxidationsgrad am Ausgang der DeN₂O-Stufe mindestens 30 % beträgt,
b) Zuführen des aus der DeN₂O-Stufe ausgetretenen Gasstromes in eine Abkühlungsvorrichtung und Abkühlen des Gasstromes beim Durchströmen dieser Vorrichtung auf eine Temperatur unterhalb von 400 °C,
c) Zuführen des aus der Abkühlungsvorrichtung ausgetretenen Gasstromes in eine DeNOₓ-Stufe zur katalytischen Reduktion von NOₓ mit einem Reduktionsmittel in Gegenwart eines DeNOₓ-Katalysators, wobei dem Gasstrom in Strömungsrichtung gesehen nach Verlassen der DeN₂O-Stufe und vor dem Durchströmen des DeNOₓ-Katalysators eine derartige Menge an Reduktionsmittel zugesetzt wird, die ausreicht, um den gewünschten Anteil an NOₓ zu reduzieren.

Bevorzugt beträgt das Verhältnis der molaren Menge an N₂O, die in die DeN₂O-Stufe eintritt, zur molaren Menge an NOₓ, die aus der DeN₂O-Stufe austritt, unabhängig vom Wassergehalt des Abgases mindestens 1,5. Besonders bevorzugt sind N₂O/NOₓ-Verhältnisse des N₂O, NOₓ und Wasser enthaltenden Gases von mindestens 2, insbesondere von mindestens 5.

Das N₂O/NOₓ-Verhältnis kann durch die Bestimmung der molaren Menge bzw. der molaren Konzentration an N₂O am Eingang der DeN₂O-Stufe und durch die Bestimmung der molaren Menge bzw. der molaren Konzentration an NOₓ am Ausgang der DeN₂O-Stufe ermittelt werden.

Für das erfindungsgemäße Verfahren geeignete Gase weisen entweder bereits vor dem Eintritt in die DeN₂O-Stufe das erforderliche Verhältnis von N₂O und NOₓ auf oder dieses Verhältnis ist durch geeignete Maßnahmen einzustellen.

Vorzugsweise erfolgt das Einstellen des geeigneten N₂O/NOₓ-Verhältnisses durch katalytisch chemische Reduktion eines Teils des im Abgasstrom enthaltenen NOₓ in der DeN₂O-Stufe selbst. Dazu wird ein dem zu reduzierenden Anteil des NOₓ entsprechender Anteil an Reduktionsmittel in den Eingangsgasstrom zur DeN₂O-Stufe eingespeist, bis das gewünschte N₂O / NOₓ-Verhältnis eingestellt ist. Die Anwesenheit des Reduktionsmittels beeinflusst den Abbau des N₂O nicht nennenswert, da die Geschwindigkeit der NOₓ-Reduktion um Grössenordnungen schneller ist als die Geschwindigkeit der N₂O-Zersetzung. Die für die Einstellung des gewünschten N₂O / NOₓ-Verhältnisses benötigten Mengen an Reduktionsmittel sind von der Art des Reduktionsmittels sowie von der gewünschten Menge an abzubauendem NOₓ abhängig und können vom Fachmann durch Routineexperimente ermittelt werden.

Ebenso wie das N₂O/NOₓ-Verhältnis ist auch der Wassergehalt des N₂O, NOₓ und Wasser enthaltenden Gases vor Eintritt in die DeN₂O-Stufe durch geeignete Maßnahmen auf den erfindungsgemäßen Wert einzustellen, sofern der Gasstrom nicht schon ausreichend Wasser enthält.

So weisen viele Abgase bereits Wassergehalte von mehr als 0,1 Vol. % auf und können damit ohne zusätzliche Maßnahmen eingesetzt werden. Vorzugsweise wird der Wassergehalt des N₂O und NOₓ enthaltenden Gases vor dem Eintritt in die DeN₂O-Stufe auf einen Wert von zwischen 0,5 und 10 Vol. % eingestellt. Besonders bevorzugt sind Werte zwischen 1 Vol. % und 5 Vol. %, und ganz besonders bevorzugt sind Werte zwischen 2 Vol. % und 5 Vol. %.

Erfahrungsgemäß ist ein erhöhter Wassergehalt, wie er vorzugsweise im erfindungsgemäßen Verfahren verwendet wird, in der nachgeschalteten DeNOₓ-Stufe unschädlich; d.h. die Leistung der DeNOₓ-Stufe wird nicht signifikant beeinträchtigt. Dies gilt sowohl bei Verwendung von klassischen SCR-Katalysatoren, wie z.B. von V₂O₅-TiO₂-basierten DeNOₓ-Katalysatoren, als auch für Fe-Zeolith-Katalysatoren.

Der Wassergehalt des N₂O, NOₓ und Wasser enthaltenden Gases kann vor Eintritt in die DeN₂O-Stufe auf verschiedene Art und Weise eingestellt werden. Eine Möglichkeit ist es, diesen durch Zugabe von Wasserdampf und/oder durch Zugabe von Wasser in flüssiger Form einzustellen. Des Weiteren ist vorzugsweise vorgesehen, den Wassergehalt durch Einleiten der Abgase aus einer Verbrennungsstufe, in der Wasserstoff und/oder Wasserstoff enthaltende Verbindungen verbrannt werden, einzustellen. Nicht zuletzt steht es dem Fachmann offen, den N₂O und NOₓ enthaltenden Gasstrom durch eine Beladungseinrichtung zu führen, die beispielsweise ein Sättiger oder ein Absorptionsturm ist. Dabei kann es sich um einen üblicherweise in Salpetersäureanlagen oder Caprolactamanlagen zur NOₓ-Absorption eingesetzten Absorptionsturm handeln. Es ist auch eine Kombination verschiedener Maßnahmen / Vorrichtungen zum Einstellen des Wassergehalts möglich. Dabei spielen die unterschiedlichsten Parameter in der Wasser-Beladungsvorrichtung, wie der vorherrschende Druck, die Temperatur und die Durchflussgeschwindigkeit des Beladungsmediums als auch des N₂O und NOₓ enthaltenden Gases eine Rolle. Der Fachmann wird derartige Parameter entsprechend des einzustellenden Wassergehalts aufgrund seines Fachwissens wählen.

Erfindungsgemäß werden in den DeN₂O-Stufe mit Eisen beladene Zeolith-Katalysatoren eingesetzt. Dabei handelt es sich vorzugsweise um Zeolithe ausgewählt aus der Gruppe der Typen MFI, BEA, FER, MOR und MEL oder Mischungen davon, bevorzugt vom Typ BEA oder MFI, besonders bevorzugt handelt es sich um einen ZSM-5-Zeolithen. Wichtig dabei ist, dass die eingesetzten Zeolithe eine hohe hydrothermale Beständigkeit aufweisen. Diese Eigenschaft zeichnet insbesondere die sogenannten "high silica"-Zeolithe aus, welche damit besonders bevorzugt sind.

Genaue Angaben zum Aufbau oder Struktur der erfindungsgemäß bevorzugt eingesetzten Zeolithe werden im Atlas of Zeolite Structure Types, Elsevier, 4th revised Edition 1996, gegeben, auf den hiermit ausdrücklich Bezug genommen wird.

Im erfindungsgemäßen Verfahren ist auch der Einsatz solcher Zeolithe eingeschlossen, in welchen das Gitteraluminium teilweise durch ein oder mehrere Elemente ausgewählt aus B, Be, Ga, Fe, Cr, V, As, Sb und Bi ersetzt ist. Ebenso eingeschlossen ist der Einsatz von Zeolithen, bei denen das Gittersilizium durch ein oder mehrere Elemente isomorph substituiert ist, beispielsweise durch ein oder mehrere Elemente ausgewählt aus Ge, Ti, Zr und Hf ersetzt ist.

Ganz besonders bevorzugt kommen in der DeN₂O-Stufe Katalysatoren zum Einsatz, die mit Wasserdampf behandelt worden sind ("gesteamte" Katalysatoren). Durch eine derartige Behandlung wird das Gitter des Zeolithen dealuminiert; diese Behandlung ist dem Fachmann an sich bekannt. Bevorzugt werden hydrothermal behandelte Zeolith-Katalysatoren in der DeN₂O-Stufe eingesetzt, die mit Eisen beladen worden sind und bei denen das Verhältnis von Extra-Gitter-Aluminium zu Gitter-Aluminium mindestens 1 : 2 beträgt, vorzugsweise 1 : 2 bis 20 : 1 beträgt.

Erfindungsgemäß verwendete Katalysatoren enthalten üblicherweise weitere dem Fachmann bekannte Zusatzstoffe, wie z.B. Bindemittel, beispielsweise Alumosilikate oder Böhmit. Erfindungsgemäß verwendete Katalysatoren basieren vorzugsweise auf Zeolithen, in die durch einen Festkörper-Ionenaustausch Eisen eingebracht wurde. Üblicherweise geht man hierfür von den kommerziell erhältlichen Ammonium-Zeolithen (z.B. NH₄-ZSM-5) und den entsprechenden Eisensalzen (z.B. FeSO₄ x 7 H₂O) aus und mischt diese auf mechanischem Wege intensiv miteinander in einer Kugelmühle bei Raumtemperatur (Turek et al.; Appl. Catal. 1984, (1999) 249- 256; EP-A-0 955 080). Auf diese Literaturstellen wird hiermit ausdrücklich Bezug genommen. Die erhaltenen Katalysatorpulver werden anschließend in einem Kammerofen an der Luft bei Temperaturen im Bereich von 400°C bis 650°C kalziniert. Nach dem Kalzinieren werden die eisenhaltigen Zeolithe in destilliertem Wasser intensiv gewaschen und nach Abfiltrieren des Zeolithen getrocknet. Abschließend werden die so erhaltenen eisenhaltigen Zeolithe mit den geeigneten Bindemitteln versetzt und gemischt und beispielsweise zu zylindrischen Katalysatorkörpern extrudiert.

Der Katalysator kann als Formkörper beliebiger Größe und Geometrie vorliegen, bevorzugt in Geometrien, die ein großes Verhältnis von Oberfläche zu Volumen aufweisen und bei deren Durchströmung ein möglichst geringer Druckverlust erzeugt wird.

Typisch sind alle in der Katalyse bekannten Geometrien, wie z.B. Zylinder, Hohlzylinder, Mehrlochzylinder, Ringe, Granulatbruch, Trilobes oder Wabenstrukturen.

Der Eisengehalt des in der DeN₂O-Stufe verwendeten Eisen-enthaltenden Zeolithen kann, bezogen auf die Masse an Zeolith, in weiten Bereichen schwanken, beispielsweise bis zu 25 % betragen, vorzugsweise jedoch 0,1 bis 10 %, und insbesondere 2 bis 7 % betragen.

In der DeN₂O-Stufe bewegt sich die Temperatur beim erfindungsgemäßen Verfahren im Bereich von 400 bis 650°C, vorzugsweise von 425 bis 600°C und insbesondere von 450 bis 550°C.

In der DeN₂O-Stufe bewegt sich der Druck beim erfindungsgemäßen Verfahren im Bereich von 1 bis 50 bar abs, vorzugsweise 1 bis 25 bar abs, besonders bevorzugt 4 bis 15 bar abs. Dabei verringert ein höherer Betriebsdruck in der DeN₂O-Stufe die zur N₂O-Zersetzung benötigte Menge an Katalysator. Ein erhöhter Druck bei ansonsten gleichen Betriebsparametern führt zu einem höheren NOₓ-Oxidationsgrad am Ausgang der DeN₂O-Stufe.

Die Katalysatormenge in der DeN₂O-Stufe muss so bemessen sein, dass der gewünschte Abbaugrad an N₂O erreicht wird, der seinerseits den gewünschten Oxidationsgrad an NOₓ am Ausgang dieser Stufe beeinflusst.

Das Reaktorbett der DeN₂O-Stufe wird vorzugsweise so mit Katalysator befüllt, dass - bezogen auf den eintretenden Gasstrom - jeweils eine Raumgeschwindigkeit von zwischen 2.000 und 50.000 h⁻¹, bevorzugt eine Raumgeschwindigkeit von zwischen 2.500 und 25.000 h⁻¹, und besonders bevorzugt eine Raumgeschwindigkeit von zwischen 3.000 und 20.000 h⁻¹ und am meisten bevorzugt eine Raumgeschwindigkeit von zwischen 4.000 und 15.000 h⁻¹ resultiert. Dabei wird im Rahmen dieser Beschreibung unter dem Begriff Raumgeschwindigkeit der Quotient aus Volumenanteilen Gasgemisch (gemessen bei 273,15 K und 1,01325 bara) pro Stunde bezogen auf einen Volumenanteil Katalysator verstanden. Die Raumgeschwindigkeit kann somit über den Volumenstrom des Gases und/oder über die Katalysatormenge eingestellt werden.

Im erfindungsgemäßen Verfahren werden die Verfahrensparameter in der DeNₓO-Stufe, also Raumgeschwindigkeit, Temperatur und Druck im Rahmen der oben angegebenen Bereiche für diese Verfahrensparameter so gewählt, dass für ein Gas mit gegebenem Wassergehalt und Verhältnis von N₂O und NOₓ am Ausgang der DeN₂O-Stufe ein Umsatz des N₂O zwischen 80 % und 98 %, bevorzugt zwischen 85 % und 97 %, und ganz besonders bevorzugt zwischen 90 % und 95 % resultiert. Ein vollständiger Abbau des N₂O soll nicht stattfinden. Ein Betrieb der DeN₂O-Stufe unter diesen Bedingungen stellt sicher, dass am Ausgang dieser Stufe der gewünschte NOₓ-Oxidationsgrad vorliegt, so dass die nachgeschaltete DeNOₓ-Stufe trotz niedrigerer Betriebstemperaturen mit der gewünschten Effizienz betrieben werden kann.

Eine bevorzugte Ausführungsform der Erfindung sieht vor, dass das N₂O, NOₓ und Wasser enthaltende Gas vor Eintritt in die DeN₂O-Stufe über eine Aufheizvorrichtung, insbesondere über einen Wärmetauscher auf eine Temperatur zwischen 400 °C und 650 °C aufgeheizt wird. Unter anderem können als Aufheizvorrichtung auch elektrische Heizer oder Brenner jeglicher Art, insbesondere katalytische Brenner, dienen. Brenner bieten eine zusätzliche Möglichkeit, den Wassergehalt im N₂O und NOₓ enthaltenden Gas zu regulieren.

Zur Entfernung des NOₓ in der nachgeschalteten DeNOₓ-Stufe muss der Gasstrom nach dessen Austritt aus der DeN₂O-Stufe abgekühlt werden, da die DeNOₓ-Stufe bei niedrigeren Temperaturen betrieben wird. Dazu lassen sich beliebige, dem Fachmann bekannte Abkühlungsvorrichtungen einsetzen. Bevorzugt wählt der Fachmann Abkühlungsvorrichtungen aus, welche die Rückgewinnung eines Teils der dem Abgasstrom entzogenen Wärme gestatten, beispielsweise Wärmetauscher.

Vorteilhaft wird der resultierende Gasstrom aus der DeN₂O-Stufe einer Abkühlungsvorrichtung zugeführt, welche die Übertragung der abgegebenen Wärme auf das N₂O, NOₓ und Wasser enthaltende Gas vor Eintritt in die DeN₂O-Stufe gestattet, wobei sich dieses Gas auf eine Temperatur zwischen 400 °C und 650 °C aufheizen lässt. Ganz besonders bevorzugt wird dazu ein Rekuperator eingesetzt.

In weiterer bevorzugter Ausgestaltung der Erfindung wird der Wärmetauscher überbrückt, so dass ein Teilstrom des N₂O, NOₓ und Wasser enthaltenden Gases oder wahlweise sogar der gesamte Gasstrom an dem Wärmetauscher vorbeigeleitet werden kann. Dabei wird die Menge dieses (Teil)stroms über ein Ventil reguliert. Somit kann die Temperatur am Eintritt in die DeN₂O-Stufe auch bei verschiedenen Fahrweisen der Anlage eingestellt werden, um den für die darauf folgende DeNOₓ-Stufe optimalen N₂O-Umsetzungsgrad und damit den optimalen NOₓ-Oxidationsgrad zu erhalten. Bevorzugt wird der resultierende Gasstrom vor dem Eintritt in die DeN₂O-Stufe einer Aufheizvorrichtung zugeführt, die insbesondere ein Brenner ist, und durch diese vor dem Eintritt in die DeN₂O-Stufe weiter aufgeheizt, wobei gegebenenfalls Wasserdampf zugeführt wird.

Beim Betrieb des erfindungsgemäßen Verfahrens in Kombination mit manchen Anlagen, beispielsweise mit Caprolactamanlagen, können besondere Maßnahmen zum Schutz des in der DeN₂O-Stufe verwendeten Katalysators erforderlich sein. In Caprolactamanlagen wird der Absorptionsturm häufig mit einer phosphathaltigen Pufferlösung als Absorptionsmittel für das NOₓ betrieben. Dabei besteht die Möglichkeit, dass Tropfen des Absorptionsmittels von dem Restgasstrom, der durch das erfindungsgemäße Verfahren gereinigt werden soll, mitgerissen werden. Dies bringt die Gefahr mit sich, dass sich mitgerissene Phosphorsäure bzw. Phosphate auf den nachgeschalteten Apparaten, wie auch in der erfindungsgemäßen Verschaltung, ablagern kann. Dadurch besteht die Möglichkeit der Desaktivierung vor allen Dingen des Katalysators der DeN₂O-Stufe. Um dieser Gefahr zu begegnen, wird der DeN₂O-Stufe in einer bevorzugten Ausführungsform ein Schutzbett vorgeschaltet, das aus Schüttkörpern oder Packungen von Formkörpern besteht, die Aluminiumoxid enthalten. Dieses Schutzbett bindet die Phosphorsäure bzw. deren Salze und schützt den Eisen-Zeolith-Katalysator der DeN₂O-Stufe. Vorzugsweise besteht diese Schüttung aus porösen Aluminiumoxid-Pellets, wie beispielsweise einem ringförmigen Extrudat. Die Schutzwirkung wird dadurch gewährleistet, dass Aluminiumoxid mit Phosphorsäure bzw. den entsprechenden Ammoniumsalzen der Phosphorsäure zu Aluminiumphosphat reagiert, welches unter den vorherrschenden Betriebsbedingungen stabil ist.

Im Bereich zwischen Austritt des Gases aus der DeN₂O-Stufe und bis direkt vor dem Katalysatorbett der DeNOₓ-Stufe wird das N₂O abgereicherte Gas mit einem Reduktionsmittel für NOₓ gemischt. Dabei kann es sich um jedweden Stoff handeln, der dem Fachmann bekannt ist und eine hohe Aktivität zur Reduktion von NOₓ aufweist. Dies können beispielsweise Stickstoff enthaltende Reduktionsmittel sein. Als Stickstoff enthaltende Reduktionsmittel können beliebige Verbindungen herangezogen werden, solange diese zur Reduktion von NOₓ geeignet sind. Beispiele sind Azane, Hydroxylderivate von Azanen, sowie Amine, Oxime, Carbamate, Harnstoff oder Harnstoffderivate. Beispiele für Azane sind Hydrazin und ganz besonders Ammoniak. Ein Beispiel für ein Hydroxylderivat von Azanen ist Hydroxylamin. Beispiele für Amine sind primäre aliphatische Amine, wie Methylamin. Ein Beispiel für Carbamate ist Ammoniumcarbamat. Beispiele für Harnstoffderivate sind N,N'substituierte Harnstoffe, wie N, N'-Dimethylharnstoff. Harnstoffe und Harnstoffderivate werden vorzugsweise in Form von wässrigen Lösungen eingesetzt.

Besonders bevorzugt wird Ammoniak als Reduktionsmittel für NOₓ eingesetzt.

Das Reduktionsmittel wird in solchen Mengen zugesetzt, wie zur Reduktion des NOₓ in gewünschtem Maße in der DeNOₓ-Stufe benötigt wird. Angestrebt ist eine Reduktion des NOₓ-Gehaltes um >80 %, vorzugsweise >90 %, ganz besonders bevorzugt >95 %, insbesondere zwischen 95 % und 100 %. Die dafür benötigten Mengen an Reduktionsmittel sind von der Art des Reduktionsmittels abhängig und können vom Fachmann durch Routineexperimente ermittelt werden.

Im Falle von Ammoniak als Reduktionsmittel für NOₓ verwendet man üblicherweise 0,8 bis 1,5, vorzugsweise 0,9 bis 1,4, besonders bevorzugt 1,0 bis 1,2 molare Anteile an Ammoniak, bezogen auf den zu reduzierenden molaren Anteil an NOₓ.

Die Art der Einbringung der Reduktionsmittel in den zu behandelnden Gasstrom ist im Sinne der Erfindung frei gestaltbar. Das Reduktionsmittel kann in Form eines Gases oder auch einer Flüssigkeit bzw. wässrigen Lösung eingebracht werden, die im zu behandelnden Gasstrom verdampft. Die Einspeisung in den zu behandelnden Gasstrom erfolgt durch eine geeignete Einleitevorrichtung, wie z.B. durch ein entsprechendes Druckventil oder durch entsprechend ausgestaltete Düsen. Vorzugsweise kann in der Leitung für den zu behandelnden Gasstrom stromabwärts zur Einleitevorrichtung ein Mischer vorgesehen sein, der die Durchmischung des zu reinigenden Gasstroms mit dem zugeführten Reduktionsmittel fördert. Bei Verwendung verschiedener Reduktionsmittel kann Zuführung und Einleitung in das zu reinigende Gas getrennt oder zusammen erfolgen.

Das Reduktionsmittel wird in Stromrichtung vor der DeNOₓ-Stufe bzw. vor dem Katalysatorbett der DeNOₓ-Stufe und nach der DeN₂O-Stufe eingebracht.

In der Verfahrensvariante, bei der ein Teil des vorhandenen NOₓ bereits in der DeN₂O-Stufe abgebaut werden soll, um das gewünschte N₂O/NOₓ-Verhältnis in der DeN₂O-Stufe einzustellen, wird das Reduktionsmittel zusätzlich in Stromrichtung vor der DeN₂O-Stufe bzw. vor dem (ersten) Katalysatorbett der DeN₂O-Stufe eingebracht.

In der DeNOₓ-Stufe kommen DeNOₓ-Katalysatoren zum Einsatz, welche die chemische Umsetzung von NOₓ mit Reduktionsmitteln fördern und deren Leistungsfähigkeit abhängig ist vom NOₓ-Oxidationsgrad des eintretenden Gasstroms. Bevorzugt sind klassische DeNOₓ-Katalysatoren (SCR-Katalysatoren), insbesondere solche enthaltend Übergangsmetalle und/oder Übergangsmetalloxide, wie z.B. Eisen-, Nickel-, Kupfer-, Cobalt-, Mangan-, Rhodium-, Rhenium- oder Vanadiumoxide oder metallisches Platin, Gold oder Palladium sowie Mischungen von zwei oder mehreren dieser Verbindungen. Besonders bevorzugt werden Katalysatoren auf V₂O₅-TiO₂-Basis oder Zeolith-basierte Katalysatoren eingesetzt, insbesondere mit Kupfer oder mit Eisen beladene Zeolithe.

Wie die DeN₂O-Katalysatoren können auch die DeNOₓ-Katalysatoren als Formkörper beliebiger Größe und Geometrie vorliegen und die für die DeN₂O-Katalysatoren genannten bevorzugten Geometrien aufweisen.

Die Ausführung der Katalysatorbetten in der DeN₂O- und der DeNOₓ-Stufe ist frei gestaltbar. Diese können beispielsweise in Form eines axial durchströmten Röhrenreaktors oder eines radial durchströmten Radialkorbreaktors oder eines lateral durchströmten "lateral flow reactor" vorliegen. Es können auch in einer Stufe mehrerere hintereinander geschaltete Katalysatorbetten vorliegen.

In der DeNOₓ-Stufe beträgt die Temperatur beim erfindungsgemäßen Verfahren weniger als 400 °C, vorzugsweise zwischen 180 und 380 °C, bevorzugt zwischen 200 und 350 °C und besonders bevorzugt zwischen 200 und 300 °C.

In der DeNOₓ-Stufe bewegt sich der Druck beim erfindungsgemäßen Verfahren im Bereich von 1 bis 50 bar abs, vorzugsweise 1 bis 25 bar abs, besonders bevorzugt 4 bis 15 bar abs. Dabei verringert ein höherer Betriebsdruck in der DeNOₓ-Stufe die zur NOₓ-Reduktion benötigte Menge an Katalysator. Ein erhöhter Druck bei ansonsten gleichen Betriebsparametern führt im allgemeinen zu einem erhöhten Abbaugrad an NOₓ am Ausgang der DeNOₓ-Stufe.

Das Reaktorbett der DeNOₓ-Stufe wird vorzugsweise so mit Katalysator befüllt, dass - bezogen auf den eintretenden Gasstrom - jeweils eine Raumgeschwindigkeit resultiert, die unter den gegebenen Temperatur- und Druckwerten in dieser Stufe eine Reduktion des am Eingang zu dieser Stufe vorliegenden NOₓ-Gehalts von mindestens 80 % bewirkt. Typische Raumgeschwindigkeiten in der DeNOₓ-Stufe bewegen sich im Bereich zwischen 2.000 und 200.000 h⁻¹, bevorzugt zwischen 5.000 und 100.000 h⁻¹, und besonders bevorzugt zwischen 10.000 und 50.000 h⁻¹. Die Raumgeschwindigkeit kann wie auch in der DeN₂O-Stufe über den Volumenstrom des Gases und/oder über die Katalysatormenge eingestellt werden.

Im erfindungsgemäßen Verfahren werden die Verfahrensparameter in der DeNOₓ-Stufe, also Raumgeschwindigkeit, Temperatur und Druck im Rahmen der oben angegebenen Bereiche für diese Verfahrensparameter so gewählt, dass für ein Gas mit gegebenem NOₓ-Oxidationsgrad und bei entsprechender Zugabe an Reduktionsmittel für NOₓ am Ausgang der DeNOₓ-Stufe eine Reduktion der Menge des NOₓ von mindestens 80 % resultiert.

Die Erfindung betrifft auch eine besonders ausgestaltete Vorrichtung, die insbesondere zur Durchführung des erfindungsgemäßen Verfahrens eingesetzt werden kann.

Dabei handelt es sich um eine Vorrichtung zur Minderung des Gehalts von NOₓ und N₂O in NOₓ, N₂O und Wasser enthaltenden Gasen umfassend die Elemente:
A) Vorrichtung (2) zur Einstellung des Wassergehaltes des NOₓ und N₂O enthaltenden Gasstromes (1),
B) stromabwärts zur Vorrichtung (2) angeordnete DeN₂O-Stufe (3) zur Minderung des N₂O-Gehalts des Gasstromes enthaltend einen mit Eisen beladenen Zeolith-Katalysator,
C) stromabwärts zur DeN₂O-Stufe (3) angeordnete Abkühlungsvorrichtung (4) zur Abkühlung des die DeN₂O-Stufe verlassenden Gasstromes (5),
D) stromabwärts zur Abkühlungsvorrichtung (4) angeordnete DeNOₓ-Stufe (6) enthaltend einen DeNOₓ-Katalysator zur Minderung des NOₓ-Gehalts des Gasstromes, und
E) Zuleitung (7) zum Einleiten von Reduktionsmittel für NOₓ in den die DeN₂O-Stufe verlassenden Gasstrom (5), die zwischen dem Ausgang der DeN₂O-Stufe (3) und stromaufwärts vor dem DeNOₓ-Katalysator der DeNOₓ-Stufe (6) angeordnet ist.

In einer bevorzugten Variante umfasst die erfindungsgemäße Vorrichtung eine Abkühlungsvorrichtung (4) für den die DeN₂O-Stufe verlassenden Gasstrom (5), die mit einer Erhitzungsvorrichtung (8) für den N₂O, NOₓ und Wasser enthaltenden Gasstrom (1) thermisch gekoppelt ist zwecks Erhitzung dieses Gasesstromes (1) vor dessen Einleiten in die DeN₂O-Stufe (3) und zwecks Abkühlen des die DeN₂O-Stufe verlassenden Gasstromes (5) vor dessen Einleiten in die DeNOₓ-Stufe (6). Dabei handelt es sich vorzugsweise um einen Wärmetauscher und ganz besonders bevorzugt um einen Rekuperator.

In einer weiteren bevorzugten Variante umfasst die erfindungsgemäße Vorrichtung eine Vorrichtung zum Einstellen des Wassergehaltes des NOₓ, N₂O und Wasser enthaltenden Gasstromes (1), welche ein Brenner (9) ist, in dem Wasserstoff und/oder wasserstoffhaltige Verbindungen enthaltendes Brenngas (10) zusammen mit Sauerstoff enthaltendem Gas (11), insbesondere Luft, verbrannt werden und dessen Abgase (12) in die Zuleitung des NOₓ, N₂O und Wasser enthaltenden Gasstromes (1) zur DeN₂O-Stufe eingeleitet werden.

In einer weiteren besonders bevorzugten Variante umfasst die erfindungsgemäße Vorrichtung eine stromaufwärts zur Erhitzungsvorrichtung (8) aus der Zuleitung für den N₂O, NOₓ und Wasser enthaltenden Gasstrom (1) vorgesehene Überleitung (13), mit der ein Teil des Gasstromes (1) oder der gesamte Gasstrom (1) direkt in die DeN₂O-Stufe (3) eingeleitet werden kann, und wobei diese Überleitung (13) mit einem Ventil (14) versehen ist, mit dem der die Erhitzungsvorrichtung (8) passierende Anteil des Gasstromes (1) gesteuert werden kann bzw. in Abhängigkeit von der Temperatur des in die DeN₂O-Stufe eintretenden Gasstroms geregelt werden kann.

Noch eine weitere besonders bevorzugte Variante betrifft eine erfindungsgemäße Vorrichtung, bei der direkt vor dem Katalysator der DeNOₓ-Stufe (6) angeordnet eine Zuleitung (7) zum Einleiten von Reduktionsmittel für NOₓ in den aus der DeN₂O-Stufe (3) ausgetretenen Gasstrom (5) vorgesehen ist, wobei vorzugsweise in der Zuleitung des Gasstromes in die DeNOₓ-Stufe stromabwärts zur Zuleitung (7) ein Mischer vorgesehen ist.

Noch eine weitere besonders bevorzugte Variante betrifft eine erfindungsgemäße Vorrichtung, bei der direkt vor dem Katalysator der DeN₂O-Stufe (3) angeordnet eine Zuleitung (17) zum Einleiten von Reduktionsmittel für NOₓ in den N₂O, NOₓ und Wasser enthaltenden Gasstrom (1) vorgesehen ist, wobei vorzugsweise in der Zuleitung des Gasstromes in die DeN₂O-Stufe stromabwärts zur Zuleitung (17) ein Mischer vorgesehen ist.

Die erfindungsgemäße Anlage ist so ausgelegt, dass der mindestens eine Katalysator der DeN₂O-Stufe ein mit Eisen beladener Zeolith ist. Dabei handelt es sich bei den Zeolithen vorzugsweise um den Typ MFI, BEA, FER, MOR und/oder MEL und besonders bevorzugt um ZSM-5.

Bevozugt wird eine Vorrichtung, worin dem mit Eisen beladenen Zeolith-Katalysator der DeN₂O-Stufe (3) ein Schutzbett vorgeschaltet ist, welches aus einer Packung oder Schüttung von Aluminiumoxid enthaltenden Formkörpern besteht.

Bevorzugt wird ebenfalls eine Vorrichtung, worin der DeNOₓ-Katalysator in der DeNOₓ-Stufe (6) ein Übergangsmetall enthaltender SCR-Katalysator ist oder ein mit Eisen oder mit Kupfer beladener Zeolithkatalysator, insbesondere ein SCR-Katalysator auf V₂O₅-TiO₂-Basis.

Nachfolgend soll die erfindungsgemäße Verschaltung anhand zweier Figuren beispielhaft näher erläutert werden, ohne dass dadurch eine Beschränkung beabsichtigt ist. Es zeigen:
- Fig. 2:: Eine Skizze des erfindungsgemäßen Verfahrens und der Anlage zur Minderung des Gehalts von NOₓ und N₂O in Gasen, wie Prozessgasen oder Abgasen
- Fig. 3:: Eine bevorzugte Variante des erfindungsgemäßen Verfahrens sowie der erfindungsgemäßen Anlage.

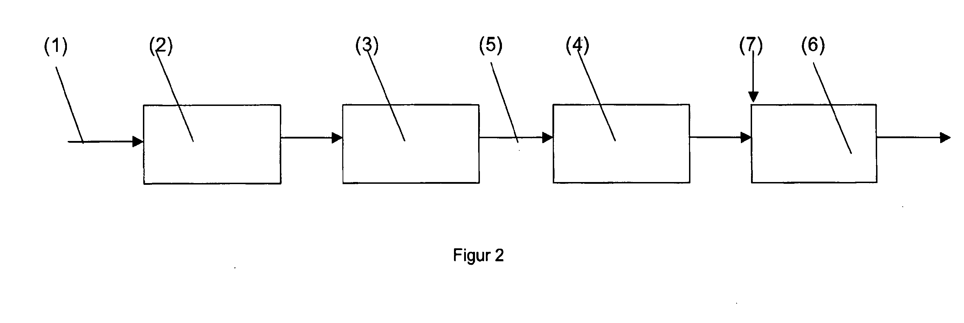

In Figur 2 ist eine Skizze des erfindungsgemäßen Verfahrens / der erfindungsgemäßen Vorrichtung dargestellt. Gezeigt wird eine Vorrichtung (2) zur Einstellung des Wassergehaltes des NOₓ und N₂O enthaltenden Gases (1). Das mit Wasser beladene Abgas tritt sodann in eine DeN₂O-Stufe (3) ein, die einen mit Eisen beladenen Zeolith-Katalysator enthält. Nach dem Durchlaufen der DeN₂O-Stufe (3) wird der Gasstrom (5) durch eine Abkühlungsvorrichtung (4) geleitet und tritt sodann in eine DeNOₓ-Stufe (6) ein, und verlässt anschließend die erfindungsgemäße Reinigungsanlage. Zu Beginn der DeNOₓ-Stufe (6) ist eine Zuleitung (7) zum Einleiten von Reduktionsmittel für NOₓ in den aus der DeN₂O-Stufe (3) ausgetretenen Gasstrom (5) vorgesehen. In der Skizze ist diese Zuleitung (7) unmittelbar vor der DeNOₓ-Stufe (6) angeordnet; diese kann auch im Bereich zwischen Ausgang der DeN₂O-Stufe (3) und der in Figur 2 dargestellten Position angeordnet sein. Diese Zuleitung (7) kann auch in die DeNOₓ-Stufe (6) selbst münden, aber vor den Eintritt des Gasstromes in das Katalysatorbett der DeNOₓ-Stufe (6).

In Figur 3 ist eine Skizze einer bevorzugten Variante der erfindungsgemäßen Verschaltung dargestellt. Ein NOₓ und N₂O enthaltender Gasstrom (1) wird in einen Wärmetauscher (18) geleitet. Darin wird dem Gasstrom (1) Wärme zugeführt und es resultiert ein aufgeheizter Gastrom (21). Ein Teilstrom (13) des Gasstromes (1) kann um den Wärmetauscher (18) herumgeleitet werden und wird anschließend zusammen mit dem anderen Teilstrom des Gasstromes (1) sowie mit einem Abgasstrom (15) aus einem Brenner (9) in eine DeN₂O-Stufe (3) eingeleitet. In Brenner (9) werden Luft (11) und Wasserstoff als Brenngas (10) verbrannt. Durch das heiße Abgas (15) wird der Gasstrom (1) weiter erhitzt und es wird weiterhin der Wassergehalt in diesem Gasstrom (1) erhöht. Dieser gelangt anschließend als Gasstrom (12) in die DeN₂O-Stufe (3), die einen Eisen-haltigen Zeolithen aufweist, der vorzugsweise von einer Al₂O₃-Schüttung umgeben ist. Dabei schützt die Al₂O₃-Schüttung den Eisen-haltigen Zeolithen vor beispielsweise Phosphat, das im Gasstrom zusätzlich enthalten sein kann. Zu Beginn der DeN₂O-Stufe (3) befindet sich eine Zuleitung (17) zum Einleiten von NH₃, das als Reduktionsmittel zum teilweisen Abbau des sich in Gasstrom (12) befindenden NOₓ dient, womit ein optimales N₂O / NOₓ Verhältnis eingestellt wird. Der die DeN₂O-Stufe (3) verlassende Gasstrom (5), der einen optimalen NOₓ-Oxidationsgrad von annährend NO : NO₂ = 1 : 1 besitzt, wird dann zum Wärmeaustausch durch den Wärmetauscher (18) geleitet. Dabei gibt der Gasstrom die gespeicherte Wärme in der Abkühlungsvorrichtung (4) (hier: Teil des Wärmetauschers (18)) an den zu erhitzenden NOₓ und N₂O enthaltenden Gasstrom (1) ab und wird dabei heruntergekühlt. Im nächsten Reinigungsschritt durchläuft der so abgekühlte Gasstrom die DeNOₓ-Stufe (6), in die zusätzlich zum NOₓ-Abbau durch Leitung (7) NH₃ eingeleitet wird. Der somit an N₂O und NOₓ abgereicherte Gasstrom verlässt die Einheit (6), wird in eine Turbine (19) geleitet und wird anschließend an die Umgebung (20) abgegeben.

Um ein optimales Anfahren der erfindungsgemäßen Vorrichtung zu gewährleisten, ist in dieser beispielhaften Ausführung der Teilstrom (13) vorgesehen. Das Volumen dieses Teilstroms ist über das Ventil (14) steuerbar. Dadurch kann sichergestellt werden, dass vor allen Dingen die DeN₂O-Stufe (3) in kurzer Zeit auf die Temperatur des NOₓ und N₂O haltigen Restgasstromes (1) gebracht wird. Damit wird die Trägheit des Systems während des Anfahrens eliminiert.

Beim Anfahren vom kalten Zustand wird das Ventil (14) also geöffnet, so dass ein Teilstrom um den Wärmetauscher (18) herumgeleitet wird. Sobald eine ausreichende Austrittstemperatur der DeN₂O-Stufe (3) erreicht ist wird der Brenner (9) gezündet, um die Temperatur des in der DeN₂O-Stufe (3) aufzureinigenden Gasstromes weiter anzuheben. Auch die Wasserkonzentration im Gasstrom (12) erhöht sich durch die Einspeisung des Abgases (15). Sind die optimalen Betriebsbedingungen für die DeN₂O-Stufe (3) erreicht, wird das Ventil (14) geschlossen und das Umgehen des Wärmetauschers (18) durch den Teilstrom (13) unterbunden. Während des Betriebes kann außerdem die Öffnung des Ventils (14) so eingestellt werden, dass eine optimale Kombination aus Eintrittstemperatur und Wassergehalt in der DeN₂O-Stufe resultiert.

Bei erneutem Anfahren der erfindungsgemäßen Anlage nach einem kurzen Stillstand, d.h. die Anlage befindet sich also noch im warmen Zustand, wird das Ventil (14) geschlossen und der gesamte Volumenstrom des NOₓ und N₂O haltigen Restgasstroms (1) passiert den Wärmetauscher (18). Der Brenner (9) wird in diesem Falle sofort gezündet, da die Temperatur in der DeN₂O-Stufe (3) von Anfang an bereits ausreichend hoch ist. Die Wasserkonzentration erhöht sich entsprechend dem Wassergehalt des Abgases (15). Die Eintrittstemperatur der DeN₂O-Stufe (3) steigt aufgrund der Vorwärmung im Wärmetauscher (18) und im Brenner (9) weiter an, bis die normale Betriebstemperatur erreicht ist.

Außerdem kann durch die Steuerung des Volumens des Teilstroms (13) ein optimaler Teillastbetrieb gewährleistet werden. Ohne die Möglichkeit der Umgehung des Wärmetauschers (18) würde im Teillastbetrieb die Temperatur des Gasstroms (1) zu hoch, da der Wärmetauscher (18) überdimensioniert wäre. Die Brennerleistung müsste gedrosselt werden, die Energierückgewinnung in der Turbine (19) würde kleiner werden und zudem würde sich der NOₓ-Schlupf erhöhen, welcher an die Umgebung abgegeben würde. Dies sind Nachteile, die durch die hier gezeigte beispielhafte Verschaltung eliminiert werden, indem die Fläche des Wärmetauschers (18) durch den Teilstrom (13) im Betrieb gemindert werden kann.

Die Erfindung wird durch die nachstehenden Beispiele in Tabellen 1 und 2 erläutert.
Die wiedergegebenen Daten resultieren aus einer kinetischen Simulation der NOₓ-assistierten N₂O-Zersetzung und des NOₓ-Gleichgewichtes mit Hilfe der Software "Presto Kinetics" der Firma CiT GmbH für eine Katalysatorschüttung von zylindrischen Pellets aus Fe-ZSM-5 (Durchmesser 2,6 mm, Länge 5,7 mm) in einem axial durchströmten Strömungsrohr-Reaktor. Das verwendete Reaktormodell wurde auf Basis von Laborversuchen entwickelt und durch Untersuchungen in einer Mini-Plant, betrieben mit o.g. Katalysatorextrudaten im Litermaßstab, verifiziert.

**Tabelle 1**

| Beispiel | **1a** | **1b** | **1c** | **1d** | **1e** | **2** | **3** | **4a** | **4b** | **4c** | **5a** | **5b** | **5c** |
|---|---|---|---|---|---|---|---|---|---|---|---|---|---|
| P in bar abs | 1 | 1 | 1 | 1 | 1 | 1 | 1 | 1 | 1 | 1 | 5 | 5 | 5 |
| Tin°C | 480 | 480 | 480 | 480 | 480 | 480 | 480 | 480 | 480 | 480 | 480 | 480 | 480 |
| [N₂O]ₑᵢₙ in ppm | 2000 | 2000 | 2000 | 2000 | 2000 | 2000 | 2000 | 2000 | 2000 | 2000 | 2000 | 2000 | 2000 |
| [NO]ₑᵢₙ in ppm | 100 | 100 | 100 | 100 | 100 | - | 200 | 500 | 500 | 500 | 500 | 500 | 500 |
| [NO₂]ₑᵢₙ in ppm | 100 | 100 | 100 | 100 | 100 | 200 | - | 500 | 500 | 500 | 500 | 500 | 500 |
| [NO_{X}]aus in ppm | 200 | 200 | 200 | 200 | 200 | 200 | 200 | 1000 | 1000 | 1000 | 1000 | 1000 | 1000 |
| [H₂O]ₑᵢₙ in % vol | 3 | 3 | 3 | 3 | 3 | 3 | 3 | 3 | 3 | 3 | 3 | 3 | 3 |
| [O₂]ₑᵢₙ in % vol | 3 | 3 | 3 | 3 | 3 | 3 | 3 | 3 | 3 | 3 | 3 | 3 | 3 |
| [N₂]ₑᵢₙ in % vol | Rest | Rest | Rest | Rest | Rest | Rest | Rest | Rest | Rest | Rest | Rest | Rest | Rest |
| Raumgeschwindigk eit in 1000 x h⁻¹ | 6,1 | 5,2 | 4,6 | 3,9 | 3,0 | 4,5 | 4,7 | 9,8 | 8,3 | 1,0 | 14,2 | 12,4 | 8,6 |
| N₂O-Abbau | 85% | 90% | 93 % | 96% | 99% | 93% | 93% | 80% | 85% | 90% | 90% | 93% | 98% |
| NOx-Oxidationsgrad am Eintritt | 50% | 50% | 50% | 50% | 50% | 100% | 0% | 50% | 50% | 50% | 50% | 50% | 50% |
| NOx-Oxidationsgrad am Austritt | 55,0% | 46,4% | 40% | 32,1% | 21,8% | 40% | 40% | 38,6% | 34,9 | 30,5 | 44,4% | 41,4 | 34,9% |
| NOx-Oxidationsgrad im Gleichgewicht | 16,5% | 16,5% | 16,5% | 16,5% | 16,5% | 16,5% | 16,5% | 16,5% | 16,5% | 16,5% | 30,6% | 30,6% | 30,6% |

**Tabelle 2**

| Beispiel | **6a** | **6a** | **7a** | **7b** | **8a** | **8b** | **9a** | **9b** | **9c** | **10a** | **10b** | **10c** | **11a** | **11b** |
|---|---|---|---|---|---|---|---|---|---|---|---|---|---|---|
| P in bar abs | 1 | 1 | 1 | 1 | 1 | 1 | 1 | 1 | 1 | 1 | 1 | 1 | 1 | 1 |
| T in °C | 480 | 480 | 480 | 480 | 480 | 480 | 480 | 480 | 480 | 480 | 480 | 480 | 430 | 430 |
| [N₂O]eln in ppm | 1000 | 1000 | 1000 | 1000 | 1000 | 1000 | 1000 | 1000 | 1000 | 2000 | 2000 | 2000 | 1000 | 1000 |
| [NO]ein in ppm | 500 | 500 | 1000 | 1000 | - | - | 500 | 500 | 500 | 100 | 100 | 100 | 100 | 100 |
| [NO₂]ₑᵢₙ in ppm | 500 | 500 | - | - | 1000 | 1000 | 500 | 500 | 500 | 100 | 100 | 100 | 100 | 100 |
| [NOₓ]aus in ppm | 1000 | 1000 | 1000 | 1000 | 1000 | 1000 | 1000 | 1000 | 1000 | 200 | 200 | 200 | 200 | 200 |
| [H₂O]ₑᵢₙ in % vol | 0,3 | 0,3 | 0,3 | 0,3 | 0,3 | 0, 3 | 3 | 3 | 3 | 0,3 | 0,3 | 0,3 | 1 | 1 |
| [O₂]ein in % vol | 3 | 3 | 3 | 3 | 3 | 3 | 3 | 3 | 3 | 3 | 3 | 3 | 3 | 3 |
| [N₂]ₑᵢₙ in % vol | Rest | Rest | Rest | Rest | Rest | Rest | Rest | Rest | Rest | Rest | Rest | Rest | Rest | Rest |
| Raumgeschwindigk eit in 1000 x h⁻¹ | 11,8 | 10,3 | 11,8 | 10,3 | 11,6 | 10,1 | 10,1 | 8,6 | 6,3 | 9,1 | 8,0 | 5,8 | 2.6 | 3,0 |
| N₂O-Abbau | 90% | 93% | 90% | 93% | 90% | 93% | 80% | 85% | 93% | 90% | 93 % | 96% | 85% | 80% |
| NOx-Oxidationsgrad am Eintritt | 50% | 50% | 0% | 0% | 100% | 100% | 50% | 50% | 50% | 50% | 50% | 50% | 50% | 50% |
| NOx-Oxidationsgrad am Austritt | 23,2% | 21,5% | 19,8% | 19,2% | 26,7% | 23.9% | 30,3% | 27,7% | 22,9% | 40,5% | 35,0% | 28,7% | 36,7% | 39,2% |
| NOx-Oxidationsgrad im Gleichgewicht | 16,5% | 16,5% | 16,5% | 16,5% | 16,5°l0 | 16,5% | 16,5% | 16,5% | 16,5% | 16,5% | 16,5% | 16,5% | 27,6% | 27,6% |

Wie in Beispielen 1a-1d ersichtlich, kann durch erfindungsgemäße Einstellung der Betriebsparameter der DeN₂O-Stufe, insbesondere eines N₂O/NOx-Verhältnisses von 2000/200 = 10, eines Wassergehaltes von 3%vol und geeignete Wahl der Raumgeschwindigkeit am Austritt der DeN₂O-Stufe ein NOₓ-Oxidationsgrad eingestellt werden, der deutlich von der thermodynamischen Gleichgewichtslage (von nur 16,5%) abweicht und erfindungsgemäß an das theoretische Optimum von 50% angenähert ist.

Wird die Raumgeschwindigkeit, wie im nicht erfindungsgemäßen Beispiel 1 e gezeigt, soweit abgesenkt, dass der N₂O Abbau 99% beträgt, beträgt der NOₓ-Oxidationsgrad nur mehr 21,8% was eine mangelhafte Ausgangslage zum Betrieb einer nachgeschalteten DeNOx-Stufe bedeuten würde.

Das Erreichen des gewünschten NOₓ-Oxidationsgrades am Austritt der DeN₂O-Stufe ist dabei in erster Näherung unabhängig vom Oxidationsgrad am Eintritt der DeN₂O-Sufe, wie in Beispielen 2 und 3 gezeigt.

Beispiele 5 a-c zeigen den positiven Einfluss eines erhöhten Betriebsdruckes auf den NOₓ-Oxidationsgrad.

Der hohe Wassergehalt von 3% vol wirkt sich erfindungsgemäß positiv aus, wie ein Vergleich der Beispiele 1b - 1 d mit den Beispielen 10a - 10c zeigt. Bei einem Wassergehalt von 0,3% vol ist hier der N₂O-Umsatz auf kleiner 96% zu begrenzen, um einen NOₓ-Oxidationsgrad von etwa 30 % zu erreichen.

Die Erniedrigung des N₂O/NOₓ-Verhältnisses auf einen Wert von 2 unter sonst gleichen Bedingungen in Beispielen 4a - 4c zeigt den Einfluss des N₂O/NOₓ-Verhältnisses, welches aber auch mit einem Wert von 2 noch ausreicht, um die erfindungsgemäße Verschiebung des NOₓ-Oxidationsgrads zu erreichen.

Wird hingegen, ein N₂O/NOₓ-Verhältnis von 1 eingestellt (Beispiele 6-9), kann die erfindungsgemäße Wirkung nur erzielt werden, wenn das Eingangsgas einen ausreichend hohen Wassergehalt aufweist und zugleich eine ausreichend hohe Raumgeschwindigkeit eingestellt wird, so dass ein ausreichend niedriger N₂O-Umsatz erreicht wird (Bsp. 9 a). In den nicht erfindungsgemäßen Beispielen 9b und 9c ist die Raumgeschwindigkeit nicht hoch genug bzw. der erzielte N₂O-Umsatz ist zu hoch und der gewünschte NOₓ-Oxidationsgrad wird nicht erreicht.

## Patentansprüche

1. Verfahren zur Minderung des Gehalts von NOₓ und N₂O in NOₓ und N₂O enthaltenden Gasen mit den Schritten
a) Leiten eines N₂O, NOₓ und Wasser enthaltenden Gasstroms zur Verringerung des N₂O-Gehalts durch Zersetzung des N₂O in Stickstoff und Sauerstoff in eine DeN₂O-Stufe enthaltend einen mit Eisen beladenen Zeolith-Katalysator, wobei der N₂O, NOₓ und Wasser enthaltende Gasstrom beim Eintritt in die DeN₂O-Stufe einen Wassergehalt zwischen 1,0 und 10 Vol. % aufweist, wobei das Verhältnis der molaren Menge an N₂O, die in die DeN₂O-Stufe eintritt, zur molaren Menge an NOₓ, die aus der DeN₂O-Stufe austritt, mindestens 1,0 beträgt, oder wobei der N₂O, NOₓ und Wasser enthaltende Gasstrom beim Eintritt in die DeN₂O-Stufe einen Wassergehalt zwischen 0,1 und kleiner als 1,0 Vol. % aufweist, wobei das Verhältnis der molaren Menge an von N₂O, die in die DeN₂O-Stufe eintritt, zur molaren Menge an NOₓ, die aus der DeN₂O-Stufe austritt, mindestens 1,5 beträgt, wobei die Temperatur des Gasstroms in der DeN₂O-Stufe auf einen Wert zwischen 400 °C und 650 °C eingestellt ist, wobei der Druck in der DeN₂O-Stufe auf einen Wert zwischen 1 und 50 bar abs eingestellt ist und wobei die Raumgeschwindigkeit in der DeN₂O-Stufe auf einen solchen Wert eingestellt ist, dass in der DeN₂O-Stufe ein N₂O-Abbau von 80% bis 98 % resultiert mit der zusätzlichen Maßgabe, dass der NOₓ-Oxidationsgrad am Ausgang der DeN₂O-Stufe mindestens 30 % beträgt,
b) Zuführen des aus der DeN₂O-Stufe ausgetretenen Gasstromes in eine Abkühlungsvorrichtung und Abkühlen des Gasstromes beim Durchströmen dieser Vorrichtung auf eine Temperatur unterhalb von 400 °C,
c) Zuführen des aus der Abkühlungsvorrichtung ausgetretenen Gasstromes in eine DeNOₓ-Stufe zur katalytischen Reduktion von NOₓ mit einem Reduktionsmittel in Gegenwart eines DeNOₓ-Katalysators, wobei dem Gasstrom in Strömungsrichtung gesehen nach Verlassen der DeN₂O-Stufe und vor dem Durchströmen des DeNOₓ-Katalysators eine derartige Menge an Reduktionsmittel zugesetzt wird, die ausreicht, um den gewünschten Anteil an NOₓ zu reduzieren.

2. Verfahren nach Anspruch 1, **dadurch gekennzeichnet, dass** das Verhältnis der molaren Menge an N₂O, die in die DeN₂O-Stufe eintritt, zur molaren Menge an NOₓ, die aus der DeN₂O-Stufe austritt, mindestens 1,5 beträgt.

3. Verfahren nach Anspruch 2, **dadurch gekennzeichnet, dass** das Verhältnis der molaren Menge an N₂O, die in die DeN₂O-Stufe eintritt, zur molaren Menge an NOₓ, die aus der DeN₂O-Stufe austritt, mindestens 2 beträgt.

4. Verfahren nach einem der Ansprüche 1 oder 2, **dadurch gekennzeichnet, dass** das molare Verhältnis von N₂O und NOₓ des NOₓ, N₂O und Wasser enthaltenden Gasstromes bereits vor dessen Eintritt in die DeN₂O-Stufe mindestens 1,5 beträgt oder dass dem NOₓ, N₂O und Wasser enthaltenden Gasstrom vor oder bei dessen Eintritt in die DeN₂O-Stufe ein Reduktionsmittel für NOₓ in einer solchen Menge zugesetzt wird, dass das im Gasstrom vorliegende NOₓ teilweise abgebaut wird, so dass das molare Verhältnis von N₂O und NOₓ unmittelbar nach dem Eintritt des NOₓ und N₂O enthaltenden Gasstromes in der DeN₂O-Stufe mindestens 1,5 beträgt.

5. Verfahren nach Anspruch 4, **dadurch gekennzeichnet, dass** der Wassergehalt des N₂O, NOₓ und Wasser enthaltenden Gasstromes vor dessen Eintritt in die DeN₂O-Stufe durch Zugabe von Wasserdampf und/oder durch Zugabe von Wasser in flüssiger Form eingestellt wird.

6. Verfahren nach einem der vorstehenden Ansprüche, **dadurch gekennzeichnet, dass** der Wassergehalt des N₂O, NOₓ und Wasser enthaltenden Gasstromes vor dessen Eintritt in die DeN₂O-Stufe durch Einleiten eines Abgasstromes aus einer Verbrennungsstufe, in der Wasserstoff und/oder Wasserstoff enhaltende Verbindungen verbrannt werden, eingestellt wird und/oder dass der Wassergehalt des N₂O, NOₓ und Wasser enthaltenden Gasstromes vor dessen Eintritt in die DeN₂O-Stufe eingestellt wird, indem dieser durch eine Wasser-Beladungsvorrichtung, ausgewählt aus einer Gruppe umfassend Sättiger und Absorptionstürme geleitet wird.

7. Verfahren nach einem der vorstehenden Ansprüche, **dadurch gekennzeichnet, dass** der N₂O, NOₓ und Wasser enthaltende Gasstrom vor Eintritt in die DeN₂O-Stufe über eine Aufheizvorrichtung auf eine Temperatur zwischen 400 °C bis 650 °C aufgeheizt wird.

8. Verfahren nach einem der vorstehenden Ansprüche, **dadurch gekennzeichnet, dass** der resultierende Gasstrom aus der DeN₂O-Stufe einer Abkühlungsvorrichtung zugeführt wird, die ein Rekuperator ist, wobei die abgegebene Wärme auf den N₂O, NOₓ und Wasser enthaltenden Gasstrom vor Eintritt in die DeN₂O-Stufe übertragen wird und dadurch auf eine Temperatur zwischen 400 °C bis 650 °C aufgeheizt wird.

9. Verfahren nach einem der Ansprüche 7 oder 8, **dadurch gekennzeichnet, dass** der Gasstrom in Strömungsrichtung gesehen vor der Aufheizvorrichtung in zwei Teilströme aufgeteilt wird, wobei ein erster Teilstrom nach Überbrückung der Aufheizvorrichtung mit dem zweiten Teilstrom, welcher die Aufheizvorrichtung passiert hat, wieder vereinigt wird, oder dass der Gasstrom um die Aufheizvorrichtung herumgeleitet wird, wobei die Menge der Teilströme über ein Ventil reguliert wird.

10. Verfahren nach einem der vorstehenden Ansprüche, **dadurch gekennzeichnet, dass** der mit Eisen beladene Zeolith-Katalysator der DeN₂O-Stufe auf einem Zeolith aus der Gruppe der Typen MFI, BEA, FER, MOR und MEL oder Mischungen davon, basiert.

11. Verfahren nach Anspruch 10, **dadurch gekennzeichnet, dass** der mit Eisen beladene Zeolith-Katalysator der DeN₂O-Stufe auf einem Zeolith des Typs BEA- oder MFI basiert.

12. Verfahren nach einem der vorstehenden Ansprüche, **dadurch gekennzeichnet, dass** der DeN₂O-Stufe ein Schutzbett vorgeschaltet ist, das Schüttkörper oder Packungen von Formkörpern enthält, die Aluminiumoxid enthalten.

13. Verfahren nach einem der vorstehenden Ansprüche, **dadurch gekennzeichnet, dass** die DeNOₓ-Stufe einen DeNOₓ-Katalysator auf V₂O₅-TiO₂-Basis enthält.

14. Verfahren nach einem der vorstehenden Ansprüche, **dadurch gekennzeichnet, dass** das Verfahren in der DeN₂O-Stufe bei Raumgeschwindigkeiten von 2.000 bis 50.000 h⁻¹ durchgeführt wird.

15. Verfahren nach einem der vorstehenden Ansprüche, **dadurch gekennzeichnet, dass** das Reduktionsmittel für NOₓ Ammoniak ist.

16. Verfahren nach einem der vorstehenden Ansprüche, **dadurch gekennzeichnet, dass** Raumgeschwindigkeit, Temperatur und Druck in der DeNOₓ-Stufe so eingestellt werden, dass NOₓ-Umsätze zwischen 80 % und 100 % erreicht werden.

17. Verfahren nach Anspruch 16, **dadurch gekennzeichnet, dass** NOₓ-Umsätze zwischen 90 % und 100 % erreicht werden.

18. Vorrichtung zur Minderung des Gehalts von NOₓ und N₂O in NOₓ, N₂O und Wasser enthaltenden Gasen umfassend die Elemente:
A) Vorrichtung (2) zur Einstellung des Wassergehaltes des NOₓ und N₂O enthaltenden Gases (1),
B) stromabwärts zur Vorrichtung (2) angeordnete DeN₂O-Stufe (3) zur Minderung des N₂O-Gehalts des Gasstromes enthaltend einen mit Eisen beladenen Zeolith-Katalysator,
C) stromabwärts zur DeN₂O-Stufe (3) angeordnete Abkühlungsvorrichtung (4) zur Abkühlung des die DeN₂O-Stufe verlassenden Gasstromes (5),
D) stromabwärts zur Abkühlungsvorrichtung (4) angeordnete DeNOₓ-Stufe (6) enthaltend einen DeNOₓ-Katalysator zur Minderung des NOₓ-Gehalts des Gasstromes, und
E) Zuleitung (7) zum Einleiten von Reduktionsmittel für NOₓ in den die DeN₂O-Stufe verlassenden Gasstrom (5), die zwischen dem Ausgang der DeN₂O-Stufe (3) und stromaufwärts vor dem DeNO,-Katalysator der DeNOₓ-Stufe (6) angeordnet ist.

19. Vorrichtung nach Anspruch 18, **dadurch gekennzeichnet, dass** die Abkühlungsvorrichtung (4) für den die DeN₂O-Stufe verlassenden Gasstrom (5) mit einer Erhitzungsvorrichtung (8) für das N₂O, NOₓ und Wasser enthaltende Gas (1) thermisch gekoppelt ist zwecks Erhitzung dieses Gases (1) vor dessen Einleiten in die DeN₂O-Stufe (3) und zwecks Abkühlen des die DeN₂O-Stufe verlassenden Gasstroms (5) vor dessen Einleiten in die DeNOₓ-Stufe (6).

20. Vorrichtung nach Anspruch 19, **dadurch gekennzeichnet, dass** die thermisch mit der Abkühlungsvorrichtung (4) für den die DeN₂O-Stufe verlassenden Gasstrom (5) gekoppelte Erhitzungsvorrichtung (8) für das N₂O, NOₓ und Wasser enthaltende Gas (1) ein Wärmetauscher ist.

21. Vorrichtung nach einem der voranstehenden Ansprüche, **dadurch gekennzeichnet, dass** die Vorrichtung A) ein Brenner (9) ist, in dem Wasserstoff und/oder Wasserstoff enthaltende Verbindungen enthaltendes Brenngas (10) zusammen mit Sauerstoff enthaltendem Gas (11) verbrannt werden und dessen Abgas (15) in das N₂O, NOₓ und Wasser enthaltende Gas (1) eingeleitet wird.

22. Vorrichtung nach einem der voranstehenden Ansprüche, **dadurch gekennzeichnet, dass** stromaufwärts zur Erhitzungsvorrichtung (8) aus der Zuleitung für den N₂O, NOₓ und Wasser enthaltenden Gasstrom (1) eine Überleitung (13) vorgesehen ist, mit welcher der gesamte Gasstrom (1) oder ein Teil des Gasstromes (1) die Erhitzungsvorrichtung (8) überbrücken kann, und dass diese Überleitung (13) mit einem Ventil (14) versehen ist, mit dem der die Erhitzungsvorrichtung (8) überbrückende Anteil des Gasstromes (1) gesteuert werden kann.

23. Vorrichtung nach einem der voranstehenden Ansprüche, **dadurch gekennzeichnet, dass** vor dem Katalysator der DeNOₓ-Stufe (6) eine Zuleitung (7) zum Einleiten von Reduktionsmittel für NOₓ in den aus der DeN₂O-Stufe (3) ausgetretenen Gasstrom (5) vorgesehen ist.

24. Vorrichtung nach einem der voranstehenden Ansprüche, **dadurch gekennzeichnet, dass** vor dem Katalysator der DeN₂O-Stufe (3) eine Zuleitung (17) zum Einleiten von Reduktionsmittel für NOₓ in den N₂O, NOₓ und Wasser enthaltenden Gasstrom (1) vorgesehen ist.

25. Vorrichtung nach einem der voranstehenden Ansprüche, **dadurch gekennzeichnet, dass** der Katalysator in der DeN₂O-Stufe (3) ausgewählt ist aus der Gruppe der mit Eisen beladenen Zeolithe vom Typ MFI, BEA, FER, MOR und/oder MEL.

26. Vorrichtung nach einem der voranstehenden Ansprüche, **dadurch gekennzeichnet, dass** dem mit Eisen beladenen Zeolith Katalysator der DeN₂O-Stufe (3) ein Schutzbett vorgeschaltet ist, welches aus einer Packung oder Schüttung von Aluminiumoxid enthaltenden Formkörpern besteht.

27. Vorrichtung nach einem der voranstehenden Ansprüche, **dadurch gekennzeichnet, dass** der DeNOₓ-Katalysator in der DeNOₓ-Stufe (6) ein Übergangsmetall enthaltender SCR-Katalysator oder ein mit Eisen oder mit Kupfer beladener Zeolith ist.

28. Vorrichtung nach Anspruch 27, **dadurch gekennzeichnet, dass** der DeNOₓ-Katalysator in der DeNOₓ-Stufe (6) ein SCR-Katalysator auf V₂O₅-TiO₂-Basis ist.

29. Vorrichtung nach einem der voranstehenden Ansprüche, **dadurch gekennzeichnet, dass** in der DeN₂O-Stufe (3) und in der DeNOₓ-Stufe (6) unterschiedliche Katalysatoren vorgesehen sind.

## Claims

1. Process for reduction of NOₓ and N₂O content in NOₓ and N₂O containing gases using steps
a) Channeling a gas stream containing N₂O, NOₓ and water for the purpose of reducing N₂O content through decomposition of the N₂O in nitrogen and oxygen into a DeN₂O-stage containing an iron-charged zeolite catalyst, wherein the gas stream containing N₂O, NOₓ and water upon entry into the DeN₂O-stage has a water content between 1.0 and 10 Vol. %, wherein the ratio of the molar amount of N₂O entering the DeN₂O-stage compared to the molar amount of NOₓ escaping from the DeN₂O-stage, is at least 1.0, or wherein the gas stream containing N₂O, NOₓ and water upon entry into the DeN₂O-stage has a water content between 0.1 and less than 1 Vol. %, wherein the ratio of the molar amount of N₂O entering the DeN₂O-stage compared to the molar amount of NOₓ escaping from the DeN₂O-stage, is at least 1.5, wherein the gas stream temperature is set to a value between 400 °C and 650 °C during the DeN₂O-stage, wherein the pressure within the DeN₂O-stage is set to a value between 1 and 50 bar abs and wherein the space velocity during the DeN₂O-stage is set to a value ensuring that the DeN₂O-stage will result in an N₂O-decomposition of 80% to 98%, provided that the NOₓ degree of oxidation at the DeN₂O-stage's exit is at least 30 %,
b) Feeding the gas stream being released from the DeN₂O-stage into a cooling device and cooling the gas stream to a temperature below 400 °C upon flowing through this device,
c) Feeding the gas stream, which was released from the cooling device, into a DeNOₓ-stage for catalytic reduction of NOₓ using a reducing agent in presence of a DeNOₓ-catalyst, wherein such an amount of reduction agent is added to gas stream in the direction of flow, after exiting the DeN₂O-stage and prior to flowing through the DeNOₓ-catalyst, as is needed to reduce NOₓ by the desired amount,

2. Process according to claim 1, **characterized in that** the ratio of molar amount of N₂O, entering the DeN₂O-stage, compared to the molar amount of NOₓ, exiting the DeN₂O-stage, is at least 1.5.

3. Process according to claim 2, **characterized in that** the ratio of molar amount of N₂O, entering the DeN₂O-stage, compared to the molar amount of NOₓ, exiting the DeN₂O-stage, is at least 2.

4. Process according to either claim 1 or claim 2, **characterized in that** molar ratio of N₂O and NOₓ of the NOₓ, N₂O and water containing gas stream is at least 1.5 prior to its entry into the DeN₂O-stage or that the gas stream containing NO_{x,} N₂O and water is enhanced prior to or during DeN₂O-stage by adding reduction agent for NOₓ in such amount as will cause the NOₓ present in the gas stream to decompose so that the molar ratio of N₂O and NOₓ immediately following entry of the gas stream containing NOₓ and N₂O into the DeN₂O-stage is at least 1.5.

5. Process according to claim 4, **characterized in that** the water content of the gas stream containing N₂O, NOₓ and water is being set by addition of water vapor and/or addition of water in liquid form prior to its entry into the DeN₂O-stage.

6. Process according to one of the preceding claims, **characterized in that** the water content of the gas stream containing N₂O, NOₓ and water is being set prior to its entry into the DeN₂O-stage by leading in an exhaust stream from a combustion stage in which hydrogen and/or compositions containing hydrogen are burned, and/or **in that** the water content of the gas stream containing N₂O, NOₓ and water is being set prior to its entry into the DeN₂O-stage by leading it through a water loading device, chosen from a group of saturators and absorption towers.

7. Process according to one of the preceding claims, **characterized in that** the gas stream containing N₂O, NOx and water is being heated to a temperature between 400 °C to 650 °C by use of a heating device prior to entry into the DeN₂O-stage.

8. Process according to one of the preceding claims, **characterized in that** the gas stream resulting from the DeN₂O-stage is being fed through a cooling device, which is a recuperator, wherein the dissipated heat is transferred to the gas stream containing N₂O, NOₓ and water prior to entry into the DeN₂O-stage and thus heated to a temperature between 400 °C and 650 °C.

9. Process according to one of claims 7 or 8, **characterized in that** the gas stream, seen in direction of the stream, is split into two partial streams ahead of the heating device, wherein the first partial stream, after initially bypassing the device, is then united with the second partial stream having already completed a pass, or that the gas stream is led around the heating device, wherein the number of partial streams is regulated via a valve.

10. Process according to one of the preceding claims, **characterized in that** the iron-loaded zeolite catalyst of the DeN₂O-stage is being based on a zeolite from the group of the types MFI, BEA, FER, MOR and MEL or mixtures thereof.

11. Process according to claim 10, **characterized in that** the iron-loaded zeolite catalyst of the DeN₂O-stage is based on a zeolite of type BEA- or MFI.

12. Process according to one of the preceding claims, **characterized in that** the DeN₂O-stage is featuring an upstream safety bed containing debris or packages of molded padding, which contain aluminum oxide.

13. Process according to one of the preceding claims, **characterized in that** the DeNOx-stage is containing a DeNOₓ-catalyst based on V₂O₅-TiO₂.

14. Process according to one of the preceding claims, **characterized in that** the process in the DeN₂O-stage is taking place at space velocity of 2.000 to 50.000 h⁻¹.

15. Process according to one of the preceding claims, **characterized in that** the reduction agent for NOₓ is ammonia.

16. Process according to one of the preceding claims, **characterized in that** the space velocity, temperature and pressure during the DeNOₓ-stage are being set in such a way, that NOₓ-conversion between 80 % and 100 % is achieved.

17. Process according to claim 16, **characterized in that**, NOₓ-conversions between 90 % and 100 % are achieved.

18. Device for reduction of NOₓ and N₂O content in gas streams containing NOₓ, N₂O and water, including the elements:
A) Device (2) for setting the water content of the gas (1) containing NOₓ and N₂O,
B) DeN₂O-stage (3) placed downstream of the device (2) for reduction of the N₂O-content of the gas stream containing an iron-loaded zeolite catalyst,
C) Cooling device (4) placed downstream of the DeN₂O-stage (3) for cooling of the gas stream (5) exiting the DeN₂O-stage,
D) DeNOₓ-stage (6) placed downstream of the cooling device (4) containing a DeNOₓ-catalyst for reduction of the gas stream's NOₓ-content, and
E) Supply pipe (7) for introduction of reducing agents for NOₓ into the gas stream (5) leaving the DeN₂O-stage, placed between the DeN₂O-stage (3) exit and upstream before the DeNOₓ-catalyst of the DeNOₓ-stage (6).

19. Device according to claim 18, **characterized in that** the cooling device (4) for the gas stream (5) exiting the DeN₂O-stage is thermally coupled with a heating device (8) for the gas (1) containing N₂O, NOₓ and water for the purpose of heating this gas (1) prior to feeding it into the DeN₂O-stage (3) and for the purpose of cooling the gas stream (5) exiting the DeN₂O-stage prior to feeding it into DeNOₓ-stage (6).

20. Device according to claim 19, **characterized in that** the heating device (8) for gas (1) containing N₂O, NOx and water, which is thermally coupled with the cooling device (4) for the gas stream (5) exiting the DeN₂O-stage is a heat exchanger.

21. Device according to one of the preceding claims, **characterized in that** the device A) is a burner (9) in which hydrogen and/or hydrogen containing burnable gas (10) are burned in conjunction with a gas (11) containing oxygen and the resulting exhaust (15) is fed into the gas (1) containing N₂O, NOₓ and water.

22. Device according to one of the preceding claims, **characterized in that** a bridge (13) upstream of the heating device (8) from the supply pipe for the gas stream (1) containing N₂O, NOₓ and water, which allows the entire gas stream (1) or a part of the gas stream (1) to bypass the heating device (8) and that this bridge (13) was furnished with a valve (14), which allows controlling the portion of the gas stream (1) to bridge the heating device (8).

23. Device according to one of the preceding claims, **characterized in that** it features a supply pipe (7) before the catalyst of the DeNOₓ-stage (6) and for the purpose of feeding in reducing agents for NOₓ from the gas stream (5) having exited DeN₂O-stage (3).

24. Device according to one of the preceding claims, **characterized in that** a supply pipe (17) is provided prior to the catalyst of DeN₂O-stage (3) for introduction of reducing agents for NOₓ in the gas stream (1) containing N₂O, NOₓ and water.

25. Device according to one of the preceding claims, **characterized in that** the catalyst in the DeN₂O-stage (3) is being chosen from the group of iron-loaded zeolites of the type MFI, BEA, FER, MOR and/or MEL.

26. Device according to one of the preceding claims, **characterized in that** it is featuring a security bed upstream of the iron-loaded zeolite catalyst of the DeN₂O-stage (3) comprised of debris or packages of molded padding which contain aluminum oxide.

27. Device according to one of the preceding claims, **characterized in that** the DeNOₓ-catalyst in the DeNOₓ-stage (6) is an SCR-catalyst containing transitional metal or a zeolite loaded with iron or copper.

28. Devices according to claim 27, **characterized in that** the DeNOₓ-catalyst in the DeNOₓ-stage (6) is a SCR-catalyst on basis of V₂O₅-TiO₂.

29. Device according to one of the preceding claims, **characterized in that** the DeN₂O-stage (3) and DeNOₓ-stage (6) are featuring different catalysts.

## Revendications

1. Procédé de réduction de la teneur en NOₓ et N₂O dans des gaz contenant du NOₓ et du N₂O par les étapes suivantes :
a) Conduction d'un flux gazeux contenant du N₂O, NOₓ et de l'eau pour réduire la teneur en N₂O par décomposition du N₂O en azote et en oxygène jusqu'à un niveau DeN₂O jusqu'à un niveau contenant un catalyseur à zéolithe chargé de fer, dans laquelle le flux gazeux contenant du N₂O, NOₓ et de l'eau présente à son entrée dans le niveau DeN₂O une teneur en eau comprise entre 1,0 et 10 % en volume, dans laquelle le rapport entre la quantité molaire de N₂O qui entre dans le niveau DeN₂O et la quantité molaire de NOₓ qui sort du niveau DeN₂O s'élève à au moins 1,0 ou dans laquelle le flux gazeux contenant du N₂O, NOₓ et de l'eau présente à son entrée dans le niveau DeN₂O une teneur en eau comprise entre 0,1 et moins de 1,0. % en volume, dans laquelle le rapport entre la quantité molaire de N₂O qui entre dans le niveau DeN₂O et la quantité de NOₓ qui sort du niveau DeN₂O s'élève à au moins 1,5, dans laquelle la température du flux gazeux est réglée dans le niveau DeN₂O à une valeur comprise entre 400 °C et 650 °C, dans laquelle la pression dans le niveau DeN₂O est réglée à une valeur comprise entre 1 et 50 bars abs et dans laquelle la vitesse spatiale dans le niveau DeN₂O est réglée à une valeur telle qu'il en résulte dans le niveau DeN₂O une décomposition de 80 % à 98 %, du N₂O, sous condition supplémentaire que le degré d'oxydation du NOₓ à la sortie du niveau DeN₂O s'élève au moins à 30 %,
b) Acheminement du flux gazeux sorti du niveau DeN₂O vers un dispositif de refroidissement et refroidissement du flux gazeux lors de son passage dans ce dispositif à une température inférieure à 400 °C,
c) Acheminement du flux gazeux sorti du niveau DeN₂O vers un niveau DeNOₓ pour la réduction catalytique du NOₓ avec un agent réducteur en présence d'un catalyseur de DeNOₓ, dans lequel il est ajouté au flux gazeux, vu dans le sens d'écoulement, une fois qu'il a quitté le niveau DeN₂O et avant qu'il passe dans le catalyseur de DeNOₓ, une quantité d'agent réducteur telle qu'elle suffise pour réduire la teneur souhaitée en NOₓ.

2. Procédé selon la revendication 1, **caractérisé en ce que** le rapport entre la quantité molaire de N₂O qui entre dans le niveau DeN₂O et la quantité molaire de NOₓ qui sort du niveau DeN₂O s'élève à au moins 1,5.

3. Procédé selon la revendication 2, **caractérisé en ce que** le rapport entre la quantité molaire de N₂O qui entre dans le niveau DeN₂O et la quantité molaire de NOₓ qui sort du niveau DeN₂O s'élève à au moins 2.

4. Procédé selon une des revendications 1 ou 2, **caractérisé en ce que** le rapport molaire entre le N₂O et le NOₓ du flux gazeux contenant du NOₓ, N₂O et de l'eau s'élève à au moins 1,5 dès son entrée dans le niveau DeN₂O ou qu'un agent réducteur est ajouté au flux gazeux contenant du NOₓ, N₂O, et de l'eau avant ou au moment de son entrée dans le niveau DeN₂O en une quantité telle que le NOₓ contenu dans l'eau est partiellement décomposé, de sorte que le rapport molaire du N₂O et du NOₓ s'élève à au moins 1,5 juste après l'entrée du flux gazeux contenant du NOₓ, N₂O et de l'eau dans le niveau DeN₂O.

5. Procédé selon la revendication 4, **caractérisé en ce que** la teneur en eau du flux gazeux contenant du NOₓ, N₂O et de l'eau est réglée avant son entrée dans le niveau DeN₂O par ajout de vapeur d'eau et/ou par ajout d'eau sous forme liquide.

6. Procédé selon une des revendications précédentes, **caractérisé en ce que** la teneur en eau du flux gazeux contenant du NOₓ, N₂O et de l'eau est réglée avant son entrée dans le niveau DeN₂O par introduction d'un flux de gaz d'échappement provenant d'un niveau de combustion dans lequel l'hydrogène et/ou des composés contenant de l'hydrogène sont brûlés et/ou que la teneur en eau du flux gazeux contenant du NOₓ, N₂O et de l'eau est réglée avant son entrée dans le niveau DeN₂O du fait que celui-ci est dirigé dans un dispositif de chargement d'eau sélectionné dans un groupe comprenant des saturateurs et des tours d'absorption.

7. Procédé selon une des revendications précédentes, **caractérisé en ce que** le flux gazeux contenant du NOₓ, N₂O et de l'eau est chauffé avant son entrée dans le niveau DeN₂O à une température comprise entre 400 °C et 650 °C à l'aide d'un dispositif de chauffage.

8. Procédé selon une des revendications précédentes, **caractérisé en ce que** le flux gazeux résultant du niveau DeN₂O est acheminé vers un dispositif de refroidissement qui est un récupérateur, dans lequel la chaleur dégagée est transférée au flux gazeux contenant du NOₓ, N₂O, et de l'eau avant son entrée dans le niveau DeN₂O-Stufe et est ainsi chauffé à une température comprise entre 400 °C et 650 °C.

9. Procédé selon une des revendications 7 ou 8, **caractérisé en ce que** le flux gazeux, vu dans le sens d'écoulement, est divisé en deux sous-flux en amont du dispositif de chauffage et dans lequel un premier sous-flux est renettoyé après avoir évité le dispositif de chauffage avec le second sous-flux qui est passé dans le dispositif de chauffage ou que le flux gazeux est dirigé autour du dispositif de chauffage, la quantité des sous-flux étant régulée à l'aide d'une soupape.

10. Procédé selon une des revendications précédentes, **caractérisé en ce que** le catalyseur à zéolithe chargé de fer du niveau DeN₂O est basé sur une zéolithe du groupe constitué par les types MFI, BEA, FER, MOR et MEL ou leurs mélanges.

11. Procédé selon la revendication 10, **caractérisé en ce que** le catalyseur à zéolithe chargé de fer du niveau DeN₂O est basé sur une zéolithe de type BEA- ou MFI.

12. Procédé selon une des revendications précédentes, **caractérisé en ce qu'**en amont du niveau DeN₂O se trouve un lit protecteur qui contient des corps en vrac ou des amas de corps moulés qui contiennent de l'oxyde d'aluminium.

13. Procédé selon une des revendications précédentes, **caractérisé en ce que** le niveau DeNOₓ contient un catalyseur de DeNOₓ à base de V₂O₅-TiO₂.

14. Procédé selon une des revendications précédentes, **caractérisé en ce que** le procédé est réalisé dans le niveau DeN₂O à des vitesses spatiales de 2 000 à 50 000 h⁻¹.

15. Procédé selon une des revendications précédentes, **caractérisé en ce que** l'agent réducteur pour le NOₓ est de l'ammoniaque.

16. Procédé selon une des revendications précédentes, **caractérisé en ce que** la vitesse spatiale, la température et la pression dans le niveau DeNOₓ sont réglées de manière à ce que des taux de NOₓ compris entre 80 % et 100 % soient atteints.

17. Procédé selon la revendication 16, **caractérisé en ce que** des taux de NOₓ compris entre 90 % et 100 % sont atteints.

18. Dispositif de réduction de la teneur en NOₓ et N₂O dans des gaz contenant du NOₓ et du N₂O et de l'eau, comprenant les éléments suivants:
A) Dispositif (2) de réglage de la teneur en eau du gaz contenant du NOₓ et du N₂O (1),
B) niveau DeN₂O-Stufe (3) disposé en aval du dispositif (2) pour réduire la teneur en N₂O du flux gazeux contenant un catalyseur à zéolithe chargé de fer,
C) dispositif de refroidissement (4) disposé en aval du niveau DeN₂O (3) pour refroidir le flux gazeux (5) quittant le niveau DeN₂O,
D) niveau DeNOₓ (6) disposé en aval du dispositif de refroidissement (4) contenant un catalyseur de DeNOₓ pour réduire la teneur en NOₓ du flux gazeux, et
E) conduite (7) pour introduire de l'agent réducteur pour le NOₓ dans le flux gazeux (5) quittant le niveau DeN₂O, laquelle conduite est disposée entre la sortie du niveau DeN₂O (3) et en aval avant le catalyseur de DeNOₓ du niveau DeNOₓ (6).

19. Dispositif selon la revendication18, **caractérisé en ce que** le dispositif de refroidissement (4) pour le flux gazeux (5) quittant le niveau DeN₂O est couplé au niveau thermique à un dispositif de chauffage (8) pour le gaz contenant du NOₓ ,N₂O (1) dans le but de chauffer ce gaz (1) avant son introduction dans le niveau DeN₂O (3) et dans le but de refroidir le flux gazeux quittant le niveau DeN₂O (5) avant son introduction dans le niveau DeNOₓ (6).

20. Dispositif selon la revendication 19, **caractérisé en ce que** le dispositif de chauffage (4) couplé au niveau thermique au dispositif de refroidissement (4) pour le flux gazeux (5) quittant le niveau DeN₂O pour le gaz contenant du N₂O, NOₓ et de l'eau (1) est un échangeur de chaleur.

21. Dispositif selon une des revendications précédentes, **caractérisé en ce que** le dispositif. A) est un brûleur (9) dans lequel du gaz de combustion (10) contenant de l'hydrogène et/ou des composés contenant de l'hydrogène (10) est brûlé avec du gaz (11) contenant de l'oxygène et dont le gaz d'échappement (15) est introduit dans le gaz contenant du N₂O, NOₓ (1).

22. Dispositif selon une des revendications précédentes, **caractérisé en ce qu'**il est prévu, en aval du dispositif de chauffage (8), à partir de la conduite pour le flux gazeux contenant du N₂O, NOₓ et de l'eau (1), une dérivation (13) grâce à laquelle l'ensemble du flux gazeux (1) ou une partie du flux gazeux (1) peut éviter le dispositif de chauffage (8) et que cette dérivation (13) est pourvue d'une soupape (14) qui permet de contrôler la fraction évitant le dispositif de chauffage (8) du flux gazeux (1).

23. Dispositif selon une des revendications précédentes, **caractérisé en ce qu'**il est prévu, en amont du catalyseur du niveau DeNOₓ (6) une conduite (7) d'introduction d'agent réducteur pour le NOₓ dans le flux gazeux (5) sorti du niveau DeN₂O (3).

24. Dispositif selon une des revendications précédentes, **caractérisé en ce qu'**il est prévu, en amont du catalyseur du niveau DeN₂O (3) une conduite (17) d'introduction d'agent réducteur pour le NOₓ dans le flux gazeux contenant du N₂O, NOₓ et de l'eau (1).

25. Dispositif selon une des revendications précédentes, **caractérisé en ce que** le catalyseur du niveau DeN₂O (3) est sélectionné dans le groupe des zéolithes chargées de fer de type MFI, BEA, FER, MOR et/ou MEL.

26. Dispositif selon une des revendications précédentes, **caractérisé en ce que**, en amont du catalyseur chargé de fer du niveau DeN₂O (3) se trouve un lit protecteur qui est constitué d'un amas ou d'une dispersion de corps moulés contenant de l'oxyde d'aluminium.

27. Dispositif selon une des revendications précédentes, **caractérisé en ce que** le catalyseur de DeNOₓ du niveau DeNOₓ (6) est un catalyseur SCR contenant un métal transitoire SCR ou une zéolithe chargée de fer ou de cuivre.

28. Dispositif selon la revendication 27, **caractérisé en ce que** le catalyseur de DeNOₓ du niveau DeNOₓ (6) est un catalyseur SCR à base de V₂O₅-TiO₂.

29. Dispositif selon une des revendications précédentes, **caractérisé en ce que** des catalyseurs différents sont prévus dans le niveau DeN₂O (3) et dans le niveau DeNOₓ (6).
